# EUROPEAN PATENT SPECIFICATION

(11) **EP 2 240 628 B1**
(45) Date of publication and mention of the grant of the patent: **19.03.2014**
(21) Application number: 08870993.6
(22) Date of filing: 29.12.2008
(51) Int. Cl.: C23C 28/00, C09D 5/08, C09D 5/10, C09D 7/12

(54) **Resin coated steel sheet and its use in a display panel**
Harzbeschichtetes Stahlblech und seine Benutzung als Anzeigetafel
Tôle d' acier revêtue de résine, et son utilisation en panneau d' affichage

(30) Priority: 27.12.2007 KR 20070139435; 09.09.2008 KR 20080088843; 23.10.2008 KR 20080104475; 26.12.2008 KR 20080134989; 26.12.2008 KR 20080134990
(43) Date of publication of application: 20.10.2010
(73) Proprietor: Posco, Pohang Kyungsangbook-do 790-300 (KR)
(72) Inventor: JO, Du-Hwan, Pohang Kyungsangbook-do 790-300 (KR); LEE, Jae-Ryung, Pohang Kyungsangbook-do 790-300 (KR); NOH, Sang-Keol, Pohang Kyungsangbook-do 790-300 (KR); KIM, Won-Soo, Pohang Kyungsangbook-do 790-300 (KR); KIM, Young-Kook, Pohang Kyungsangbook-do 790-300 (KR)
(74) Representative: Potter Clarkson LLP
(86) International application number: PCT/KR2008/007743
(87) International publication number: WO 2009/091129

(56) References cited:
- WO-A1-2007/013761
- WO-A1-2007/075050
- JP-A- 10 128 906
- JP-A- 2006 199 985
- KR-A- 20060 087 101
- KR-B1- 100 507 579
- KR-B1- 100 685 027
- KR-B1- 100 782 719
- US-A- 3 657 092
- US-A1- 2005 032 934

## Description

### [Technical Field]

The present invention relates to a resin-coated steel sheet, a resin composition therefor, and a steel sheet surface treatment composition, and more particularly, to a resin-coated steel sheet having excellent properties such as electroconductivity, electrostatic earth property, fingerprint resistance, corrosion resistance, solvent resistance, workability, press formability, workability at multi-processed part, electromagnetic shielding property, adhesion, elongation and heat release property, a resin composition therefor, and a steel sheet surface treatment composition. Furthermore, the present invention relates to a resin-coated steel sheet comprising differentiated coating films formed on both surface of a steel sheet having excellent properties such as electroconductivity, adhesion and heat release property.

### [Background Art]

Resin-coated steel sheets have been widely used in the field of various applications such as inner/outer steel plates in electric home appliances, computers since they have excellent properties such as workability, fingerprint resistance, solvent resistance, corrosion resistance and chemical resistance and show a beautiful black color.

With the recent development of high-performance, small-scaled and highly functional electronic equipment, internal temperature of the electronic equipment increases as heat and electromagnetic waves generated in its electronic parts/circuits increase, which leads to the erroneous operation of the electronic equipment, the changes in properties of resistant parts and the reduced life span of the electronic parts/circuits. As an alternative heat-release system used to solve the above-mentioned problems, a heat plate, a fan and pipe are used.

In particular, a large amount of heat is generated in displays of electric home appliances due to the innate characteristics of the display system. In order to solve this problem, there have been attempts to endow a steel sheet for a black cover with heat absorption and/or heat release property. As one of conventional methods to endow a steel sheet with heat release property, a method for releasing heat from a steel sheet to the outside, comprising: mixing a pigment having excellent thermal emissivity at an infrared wavelength region, such as carbon black or titania, with a polyester resin and coating a steel sheet with a pigment mixture to form a coating film, has been used.

For the conventional method, a large amount of a pigment is added to a polyester resin so as to give excellent heat absorption and/or heat release property to a steel sheet, which leads to an increase in thickness of a coating film. Therefore, the conventional method has problems associated with the increases in the manufacturing cost and electrical resistance of the steel sheet. Also, the steel sheet should necessarily have good electroconductivity since it should have electrostatic earth property in order to prevent electromagnetic waves from being generated in the electronic equipment.

Meanwhile, a pre-coating metal (PCM) steel sheet, which has been used in the conventional electric home appliances, has a three-layer structure comprising a pre-treatment layer, a lower coating layer and an upper coating layer. However, since the PCM steel sheet having thick coating films formed on both sides of a steel sheet has low surface conductivity, it is difficult to expect an electromagnetic shielding effect from the PCM steel sheet.

Furthermore, the above-mentioned heat release property and excellent surface conductivity are required in the resin-coated steel sheet, and excellent adhesion of a resin-coating film to steel sheet is also required in consideration of the workability in processing a steel sheet.

Therefore, resin-coated steel sheets having improved physical properties such as electroconductivity, heat release property, coating adhesion, electromagnetic shielding effectiveness, fingerprint resistance and workability are required.

### [Disclosure]

### [Technical Problem]

The present invention is designed to solve the problems of the prior art, and therefore it is an object of the present invention to provide a resin-coated steel sheet having excellent physical properties such as electroconductivity, electrostatic earth property, fingerprint resistance, corrosion resistance, solvent resistance, workability, press formability, workability at multi-processed part, electromagnetic shielding property, adhesion and heat release property.

Another object of the present invention to provide a resin composition that endows a steel sheet to physical properties such as electroconductivity, electrostatic earth property, fingerprint resistance, corrosion resistance, solvent resistance, workability, press formability, workability at multi-processed part, electromagnetic shielding property, adhesion and heat release property.

Still another object of the present invention to provide a steel sheet surface treatment composition that is used to improve the adhesion between a steel sheet and a resin-coating film and protect a surface of the steel sheet.

### [Technical Solution]

According to the present invention there is provided a resin-coated steel sheet, comprising:
a base steel sheet;
a steel sheet surface treatment coating film formed of a steel sheet surface treatment composition on at least one of first and second surfaces of the base steel sheet, wherein the steel sheet surface treatment composition comprises 0.5 to 10 parts by weight of a silane coupling agent, 1 to 20 parts by weight of a metal silicate compound, 0.2 to 8 parts by weight of a titanium compound and up to 40 parts by weight of a resin-melamine based curing agent composition which comprises at least one of a resin selected from the group consisting of polyethylene acrylate resin and polyurethane resin having a weight average molecular weight of 2,000 to 25,000 and a melamine based curing agent, and 20 to 60 parts by weight of a urethane resin having a number average molecule weight of 1000 or less, and,
a resin-coating film formed of a resin composition on at least one surface selected from the group of the first base steel sheet, the second base steel sheet, the first steel sheet surface treatment coating film and the second steel sheet surface treatment coating film and the resin composition comprises (1) 20 to 50 parts by weight of a main resin-melamine based curing agent composition comprising at least one of resin selected from the group consisting of polyester resin and acrylic resin having a weight average molecule weight of 2,000 to 50,000, (2) 2 to 8 parts by weight of a pigment and (3) 2 to 8 parts by weight of a flatting agent, wherein a dry coating thickness of the steel surface treatment coating film is 0.5 to 3.0 µm (micrometers), and the steel sheet surface treatment composition applied to the second surface of the base steel sheet has a higher dry coating thickness than the steel sheet surface treatment composition applied to the first surface of the base steel sheet.

### [Advantageous Effects]

As described above, the steel sheet provided according to the present invention has improved properties such as electroconductivity, electrostatic earth property, fingerprint resistance, corrosion resistance, solvent resistance, elongation, workability, press formability, workability at multi-processed part, electromagnetic shielding property, adhesion and heat release property, and is also environment-friendly since the resin composition and the steel sheet surface treatment composition do not contain chromium. Also, the steel sheet according the present invention has a good appearance since the resin composition and the steel sheet surface treatment composition are tinged with beautiful semigloss colors. Therefore, the steel sheet is suitably used for panels for electronic equipment, particularly for display panels for electric home appliances, display panel, and interior/exterior panels for electronic equipment. Furthermore, the steel sheet shows excellent properties such as electrostatic earth property and electromagnetic shielding characteristics since it has a surface electric resistance of 10 mΩ (milliohms) or less.

### [Description of Drawings]

FIG. 1 is a side cross-sectional view illustrating a steel sheet according to one exemplary embodiment of the present invention comprising a base steel sheet; and a lower coating film and a resin-coating film, both of which are formed on a first surface of the base steel sheet.
FIG. 2 is a side cross-sectional view illustrating a steel sheet according to one exemplary embodiment of the present invention comprising a base steel sheet; a lower coating film and a resin-coating film, both of which are formed on a first surface of the base steel sheet; and a lower coating film formed on a second surface of the base steel sheet.
FIG. 3 is a side cross-sectional view illustrating a steel sheet according to one exemplary embodiment of the present invention comprising a base steel sheet; and a lower coating film and a resin-coating film, both of which are formed on both of first and second surfaces of the base steel sheet.
FIG. 4 is a side cross-sectional view illustrating a steel sheet according to one exemplary embodiment of the present invention comprising two differentiated lower coating films, one lower coating film being formed on a first surface of the base steel sheet to improve conductivity of a steel sheet, and the other lower coating film being formed on a second surface of the base steel sheet to improve adhesion and heat release property of a steel sheet.
FIG. 5 is a diagram illustrating equipment used to determine physical properties such as heat absorption and heat release property.
FIG. 6 is a photograph illustrating an electroconductive resin-coating film comprising an electroconductive additive (spherical aluminum powder) used in Inventive example 6-1.
FIG. 7 is a graph illustrating the results obtained by determining heat-release temperatures of a steel sheet of Example 57, an aluminum (Al) steel sheet, and steel sheets of Comparative examples 1 and 2.
   * Brief description of major parts in the drawings *
   a .... Styrofoam constituting a box b .... heater
   c .... aluminum foil d .... thermometer
   e .... test sample
   f .... radiation-intercepting aluminum plate

### [Best Mode]

Hereinafter, a resin-coated steel sheet, a resin composition and a steel sheet surface treatment composition according to exemplary embodiments of the present invention will be described in detail.

First, a steel sheet surface resin composition (an upper coating composition) and a steel sheet surface treatment composition (a lower coating composition) applied to the steel sheet according to one exemplary embodiment of the present invention are now described in more detail.

### (Resin composition)

One or both surfaces of a base steel sheet are coated with a resin composition to form a resin-coating film (an upper coating film) so as to endow a steel sheet with physical properties such as electroconductivity, electrostatic earth property, fingerprint resistance, corrosion resistance, solvent resistance, workability, press formability, workability at multi-processed part, electromagnetic shielding property, adhesion and heat release property, as required in the steel sheet.

The resin-coating film is formed by coating a base steel sheet with a resin composition and drying the base steel sheet. The resin composition comprises a main resin, a melamine-based curing agent, a pigment, a flatting agent, and the balance of a solvent. The resin composition provided according to one exemplary embodiment of the present invention also may further comprise at least one additive selected from the group consisting of a fingerprint-resistant additive, an electroconductive additive and a titanium compound.

Among the components of the resin composition, the main resin and the melamine-based curing agent may be mixed into a main resin/melamine-based curing agent composition. The main resin that may be used herein includes, but is not particularly limited to, a polyester resin, a polyepoxy resin, a polyurethane resin and an acrylic resin. The main resin may be used alone or in combinations thereof. As the main resin, a resin having a weight average molecule weight (Mw) of 2,000 to 50,000, preferably 2,000 to 30,000, more preferably 2,000 to 20,000, still more preferably 4,000 to 30,000, further more preferably 4,000 to 20,000, and most preferably 4,000 to 15,000 is preferably used, depending on the use and the desired physical properties of the steel sheet. The solvent resistance and workability of the coating film is insufficiently achieved when the weight average molecule weight of the main resin is less than 2,000, whereas the storage stability, coating adhesion and workability of the resin composition are undesirably deteriorated when the weight average molecule weight of the main resin exceeds 50,000. A high molecular weight polyester resin having excellent elongation and workability, particularly a polyester resin having a number average molecule weight of greater than 20,000 to 50,000, is preferably mixed with the resin composition, particularly a resin composition applied to the steel sheet so as to improve the multiple workability of the steel sheet.

A highly reactive, melamine-based curing agent is used as the curing agent in the resin coating composition when a duration time is short as in an induction heating furnace. The melamine-based curing agent that may be used herein includes, but is not particularly limited to, melamine, butoxymethyl melamine, hexamethoxymethyl melamine and trimethoxymethyl melamine. The melamine-based curing agent may be used alone or in combinations thereof.

The main resin and the melamine curing agent may be mixed in a weight ratio of 10:0.8 to 10:7, preferably in a weight ratio of 10:1 to 10:7, more preferably in a weight ratio of 10:1 to 10:5, still more preferably in a weight ratio of 10:3 to 10:5, most preferably in a weight ratio of 10:2 to 10:4. It is preferred to mix the main resin and the melamine-based curing agent at the mixing ratio in terms of the physical properties of a coating film, and a formation of a compact coating film.

The main resin/melamine-based curing agent composition may be mixed in a content of 20 to 50 parts by weight, and preferably 20 to 40 parts by weight with the contents of the other components in the resin composition. The corrosion resistance, solvent resistance and workability are insufficiently achieved when a mixing content of the main resin/melamine-based curing agent composition is less than 20 parts by weight. On the contrary, when the mixing content of the main resin/melamine-based curing agent composition exceeds 50 parts by weight, the viscosity of the resin composition is too high due to the high resin content, which leads to the deteriorated physical properties of a coating film.

The pigment may be mixed in a content of 2 to 8 parts by weight, preferably 2 to 6 parts by weight, and more preferably 3 to 5 parts by weight with the contents of the other components in the resin composition. The sufficient heat absorption and/or heat release is not achieved when a content of pigment is less than 2 parts by weight, whereas the resin composition has high viscosity and shows poor physical properties such as solvent resistance, coating adhesion and surface appearance when the content of pigment exceeds 8 parts by weight. The pigment may be used alone or together with other components. As the pigment, any pigments applicable to the resin composition may be used in consideration of the heat release property and colors of the resin composition to be applied to a steel sheet. Examples of the pigment include, but are not particularly limited to, a black pigment such as carbon black and carbon nanotube, graphite, a ceramic pigment, and a color pigment used as a toning agent in a PCM steel sheet. The ceramic pigment includes, but is not particularly limited to, conventional metal oxides that have been known to be applicable in the art, for example, metal oxides of chromium, iron, nickel, cobalt, antimony, tin, silicon, lead, aluminum, vanadium, praseodymium and titanium, and they may be used alone or in combinations thereof so as to show a variety of colors.

Examples of the carbon black pigment include, but are not particularly limited to, Nerox™series(Ebonics, Germany), Printex™series and Highblack™ series, etc. The pigment may be used alone or together with at least 2 kinds of the other pigments.

A mean particle diameter of the pigment is preferably in a range of approximately 10 to 100 nm (nanometers), preferably 10 to 30 nm (nanometers) in terms of the dispersion of the dispersion, but the present invention is not particularly limited thereto.

A flatting agent is added to the resin composition so as to improve the corrosion resistance and shielding effect of a resin-coating film and reduce the gloss of the resin-coating film. The flatting agent may be mixed in a content of 2 to 8 parts by weight, preferably 2 to 6, and more preferably 4 to 6 parts by weight of the contents of the other components in the resin composition. When the content of the flatting agent is less than 2 parts by weight, it is difficult for electric home appliances to show a desirable level of the gloss. On the contrary, when the content of the flatting agent exceeds 8 parts by weight, it is difficult to obtain a steel sheet having good appearance due to the low gloss and very high viscosity of the resin composition. The flatting agent that may be used herein includes, but is not particularly limited to, silica, magnesia, zirconia, alumina and titania. The flatting agent may be used alone or in combinations thereof. Silica is preferably used as the flatting agent.

The resin composition may further comprise a fingerprint-resistant additive and/or an electroconductive additive, depending on the use and desired physical properties of the resin-coated steel sheet.

In order to improve the surface electroconductivity of a steel sheet, the electroconductive additive may be further mixed in a content of up to 10 parts by weight, preferably 2 to 10 parts by weight, and more preferably 4 to 8 parts by weight of the contents of the other components in the resin composition. The electroconductive additive may be added to the resin composition, when necessary, without defining the lower content limit of the electroconductive additive. However, the electroconductive additive is preferably added in a content of 2 or more parts by weight so as to show an effect to improve the conductivity of the resin composition by the addition of the electroconductive additive. When the content of the conductivity additive content exceeds 10 parts by weight, the physical properties and workability of steel sheet are undesirable. A non-spherical electroconductive additive is allowed to show desired electroconductivity when it is added in a large content exceeding 10 parts by weight, but it is undesirable in terms of the workability of steel sheet when the content of the non-spherical electroconductive additive exceeds 10 parts by weight. Therefore, the use of the spherical electroconductive additive is preferred. The term "spherical" in the spherical electroconductive additive means a spherical powder having an eccentricity of 0.5 or less. The use of spherical metal powder having an eccentricity of 0.5 or less is desirable in terms of the electroconductivity. The metal powder used has a mean particle diameter of 1.0 *µ*m (micrometers) or less, and preferably 0.5 *µ*m (micrometers) or less in consideration of the coating properties and dispersion property, but is used in the resin composition without defining the lower limit on the particle size of the metal powder. Examples of the electroconductive additive include, but are not particularly limited to, aluminum, nickel, zinc and iron powder particles. The electroconductive additive may be used alone or in combination thereof.

In order to improve the fingerprint resistance of a steel sheet, the fingerprint-resistant additive may be further mixed in a content of up to 2 parts by weight, and preferably 0.5 to 2 parts by weight with the contents of the other components in the resin composition. The fingerprint-resistant additive may be added to the resin composition, when necessary, without defining the lower content limit of the fingerprint-resistant additive. Here, when the content of the fingerprint resistance-improving additive is less than 0.5 parts by weight, it is difficult to obtain a steel sheet having excellent fingerprint resistance, whereas when the content of the fingerprint resistance-improving additive exceeds 2 parts by weight, the storage stability of the resin composition may be deteriorated. Examples of the fingerprint resistance-improving additive include, but are not particularly limited to, a silicon-based additive such as dimethyltetramethoxy disiloxane, dodecamethylpenta siloxane and dimethyl polysiloxane, and a modified acrylic resin, and they may be used alone or in combinations thereof. The fingerprint-resistant additive functions to improve the water repellency of a coating film, thus to protect the coating film from fingerprints or various contaminants.

In addition, the titanium compound may be further mixed in a content of up to 6 parts by weight, preferably 2 to 6 parts by weight, and more preferably 2 to 4 parts by weight with the content of the other components in the resin composition, when necessary. The titanium compound is a cross-linking agent that is added to facilitate the curing of the resin composition and maintain and improve the corrosion resistance of a coating film. The titanium compound may be added to the resin composition, when necessary, without defining the lower content limit of the titanium compound. However, the titanium compound is preferably added in a content of 2 or more parts by weight so as to show effects by the addition of the titanium compound. When the titanium compound is added in a content of 2 or more parts by weight, it is possible to sufficiently facilitate the curing of the resin composition and achieve the high corrosion resistance of a coating film. On the contrary, even when the titanium compound is added in a content of greater than 6 parts by weight, it is difficult to expect an effect to further improve the physical properties by the addition of the titanium compound. Examples of the titanium compound include, but are not particularly limited to, titanium carbonate, isopropylditriethanolamino titanate, titanium lactate chelate and titanium acetylacetonate. The titanium compound may be used alone or in combinations thereof.

In order to further improve the physical properties of a steel sheet coated with the resin composition, in addition to the above-mentioned components, the resin composition may be further mixed with at least one additive selected from the group consisting of wax, a curing catalyst, a pigment anticoagulant, an antifoaming agent, a phosphate-based additive and a silane compound, when necessary. These additives have been widely known in the art, and may be used in a suitable mixing ratio by those skilled in the art, when necessary, but the present invention is not particularly limited thereto.

The resin composition may comprise 20 to 50 parts by weight of a main resin/melamine-based curing agent composition, 2 to 8 parts by weight of a pigment and 2 to 8 parts by weight of a flatting agent. For example, the resin composition may be prepared comprising 20 to 50 parts by weight of a main resin/melamine-based curing agent composition, 2 to 8 parts by weight of a pigment, 2 to 8 parts by weight of a flatting agent, and the balance of a solvent, based on 100 parts by weight of the resin composition, but the present invention is not particularly limited thereto. In addition to the main resin/melamine-based curing agent composition, the pigment and the flatting agent, the resin composition may further comprise a fingerprint-resistant additive, an electroconductivity additive and/or a titanium compound, based on 100 parts by weight of the resin composition.

Except for the mixed components of the resin composition, the balance is a solvent. The solvent that may be used herein includes cyclohexanone, toluene, xylene, isopropanol, solvent naphtha, cellosolve, cellosolve acetate, butylcellosolve, etc. The solvent may be used alone or in combinations thereof. The most preferred solvent is cyclohexanone that is one of ketones having good spreading property after the coating process.

The viscosity of the resin composition is adjusted according to the content of the solvent. Here, the content of the solvent may be adjusted to a suitable content range using the conventional widely known methods, as apparent to those skilled in the art, but the present invention is not particularly limited thereto. The content of the solvent is preferably adjusted in consideration of the control of the coating content and the adhesion of the resin composition, for example, adjusted to such content that the resin composition can have such a viscosity that it takes 20 to 80 seconds to discharge the resin composition from a Ford cup (Serial. No. #4) or a DIN cup (Serial. No. 53211), but the present invention is not particularly limited thereto.

Also, the solid content of the resin composition is preferably adjusted to 30 to 60 % by weight, and preferably 30 to 50 % by weight with the solvent in consideration of the heat release property by the resin composition and the adhesion of the resin composition to a steel sheet surface treatment coating film. In particular, a fingerprint resistance resin composition including the fingerprint-resistant additive preferably has a solid content of 50 to 60 % by weight in consideration of the heat release property and fingerprint resistance of the resin-coated steel sheet. In particular, an electroconductive resin composition comprising the electroconductive additive preferably has a solid content of 35 to 55 % by weight in consideration of the heat release property and electroconductivity.

Hereinafter, the resin composition provided according to one exemplary embodiment of the present invention is now described in more detail. Except for the detailed description of the resin composition as described later, the same components of the resin composition are applicable in the same manner.

### (Fingerprint resistance-improving resin composition)

In accordance with one exemplary embodiment of the present invention, a resin composition, which comprises 20 to 40 parts by weight of a main resin/melamine-based curing agent composition, 2 to 6 parts by weight of a pigment, 2 to 6 parts by weight of a flatting agent and 0.5 to 2 parts by weight of a fingerprint-resistant additive, is provided. A resin having a weight average molecule weight of 4,000 to 15,000 is preferably used as the main resin in consideration of the solvent resistance of a resin coating film and the storage stability of the resin composition.

The main resin and the melamine-based curing agent in the main resin/melamine-based curing agent composition may be mixed in a weight ratio of 10:1 to 10:5, and preferably 10:2 to 10:4 to form a compact coating film. The main resin/melamine-based curing agent composition is preferably mixed in a content of 20 to 40 parts by weight of the contents of the other components in the resin composition in consideration of the corrosion resistance, solvent resistance, and the applicability of a coating film, etc. The pigment is preferably mixed in a content of 2 to 6 parts by weight of the contents of the other components in the resin composition in terms of the heat absorption and/or heat release property, the shielding ratio of a base steel sheet, and the applicability of the resin composition.

The flatting agent may be mixed in a content of 2 to 6 parts by weight of the contents of the other components in the resin composition in terms of the desired gloss and surface appearance of a steel sheet. The titanium compound may be mixed in a content of up to 6 parts by weight, and preferably 2 to 6 parts by weight of the contents of the other components in the resin composition in terms of the curing property and corrosion resistance of a coating film. The fingerprint-resistant additive may be mixed in a content of 0.5 to 2 parts by weight of the contents of the other components in the resin composition in terms of the fingerprint resistance and solution stability of the resin composition.

### (Conductivity-improving resin composition)

In accordance with one exemplary embodiment of the present invention, a resin composition, which comprise 20 to 40 parts by weight of a main resin/melamine-based curing agent composition, 2 to 8 parts by weight of a pigment, 2 to 8 parts by weight of a flatting agent and 2 to 10 parts by weight of an electroconductive additive, is provided. In consideration of the solvent resistance of a resin coating film, the workability of a resin-coated steel sheet and the storage stability of the resin composition, a resin having a weight average molecule weight of 2,000 to 30,000, preferably 4,000 to 30,000, more preferably 4,000 to 20,000, and still more preferably 4,000 to 15,000 is used as the main resin.

The main resin and the melamine-based curing agent may be mixed in the main resin/melamine-based curing agent composition so that it can be applied in a weight ratio of 10:1 to 10:7, preferably 10:1 to 10:5, more preferably 10:3 to 10:5, and still more preferably 10:2 to 10:4 to form a compact coating film. The main resin/melamine-based curing agent composition is preferably mixed in a content of 20 to 40 parts by weight of the contents of the other components in the resin composition in consideration of the corrosion resistance, solvent resistance, and the workability of a steel sheet and the applicability of a coating film, etc. The pigment is preferably mixed in a content of 2 to 8 parts by weight, and preferably 2 to 6 parts by weight of the contents of the other components in the resin composition in terms of the heat absorption and/or release property and the surface appearance of a resin-coated steel sheet, the shielding ratio of a base steel sheet, and the applicability of the resin composition. The flatting agent may be mixed in a content of 2 to 8 parts by weight, preferably 2 to 6 parts by weight, and more preferably 4 to 6 parts by weight of the contents of the other components in the resin composition in terms of the desired gloss and surface appearance of a resin-coated steel sheet. The titanium compound may be mixed in a content of up to 6 parts by weight, preferably 2 to 6 parts by weight, and more preferably 2 to 4 parts by weight of the contents of the other components in the resin composition in terms of the excellent curing property of coating film and corrosion resistance of a resin-coated steel sheet. The electroconductive additive may be mixed in a content of 2 to 10 parts by weight of the contents of the other components in the resin composition in consideration of the electroconductivity, the workability and surface characteristics of a resin-coated steel sheet.

### (Multiple workability-improving resin composition)

Also described herein is a resin composition (a multiple workability-improving resin composition) comprising 100 parts by weight of a polyester resin, 8 to 20 parts by weight of a melamine-based curing agent, 5 to 15 parts by weight of a flatting agent and 5 to 15 parts by weight of a pigment is provided, wherein the polyester resin has a number average molecule weight of greater than 20,000 to 50,000, particularly shows an effect to improve the workability at multi-processed part among the physical properties of a steel sheet when the steel sheet is coated with the resin composition. A high molecular weight polyester resin having excellent elongation and workability is used as the polyester resin in the multiple workability-improving resin composition. A polyester resin having an aliphatic molecular structure is also preferred since it has low viscosity and high elongation. As the polyester resin, a polyester resin having a number average molecule weight of greater than 20,000 to 50,000, preferably 21,000 to 50,000, more preferably 21,000 to 35,000, and still more preferably 23,000 to 30,000 is preferably used as the polyester resin. The expression 'number average molecule weight of greater than 20,000' means any number average molecule weight that is higher than 20,000. When the number average molecule weight of the polyester resin is 20,000 or less, the workability, more particularly the coating crack resistance of a multi-processed part is not sufficient, whereas the use of the polyester resin is undesirable in terms of the resin synthesis when the number average molecule weight of the polyester resin exceeds 50,000. Also, the use of resin having a higher number average molecule weight is desirable in terms of the coating crack resistance since the flexibility of molecules increases with an increasing number average molecule weight of the polyester resin, and thus a resin-coating film is easily elongated during a deep drawing process. However, when the number average molecule weight of the polyester resin is too high, the coating adhesion may be low.

More preferably, at least two kinds of polyester resins having different number average molecule weights are desirably mixed and used as the polyester resin. For example, a polyester resin mixture, which is prepared by mixing a polyester resin having a number average molecule weight of greater than 20,000 to 25,000 with a polyester resin having a number average molecule weight of greater than 25,000 to 50,000, and preferably a number average molecule weight of greater than 25,000 to 35,000, may be used herein, but the present invention is not particularly limited thereto. More particularly, a polyester resin mixture, which is prepared by mixing a polyester resin having a number average molecule weight of greater than 20,000 to 25,000 and a polyester resin having a number average molecule weight of greater than 25,000 to 50,000, and more preferably mixing a polyester resin having a number average molecule weight of 23,000 to 25,000 and a polyester resin having a number average molecule weight of 27,000 to 35,000 so that the polyester resin with a number average molecule weight of greater than 20,000 to 25,000 and the polyester resin with a number average molecule weight of greater than 25,000 to 50,000 can be mixed in a weight ratio of 3:7 to 7:3, is preferably used as the polyester resin. The expression 'number average molecule weight of greater than 25,000' means any number average molecule weight that is higher than 25,000. When the content of the polyester resin having a number average molecule weight of greater than 20,000 to 25,000 is less than the lower limit, the coating crack resistance of a resin-coated steel sheet is insufficiently achieved, whereas the coating adhesion may be deteriorated when the content of the polyester resin having a number average molecule weight of greater than 25,000 to 50,000 exceeds the upper limit. Also, when the content of the polyester resin having a number average molecule weight of greater than 20,000 to 25,000 exceeds the upper limit, that is, when the content of the polyester resin having a number average molecule weight of greater than 25,000 to 50,000 is less than the lower limit, the adhesion to a resin-coating film is insufficiently achieved, and cracks may occur on a steel sheet.

As the curing agent in the multiple workability-improving resin composition, a melamine-based curing agent is mixed in a content of 8 to 20 parts by weight, based on 100 parts by weight of the polyester resin. When the content of the melamine-based curing agent is less than 8 parts by weight, the components such as pigment and silica are poorly fixed onto a surface of a steel sheet by means of the insufficiently cured resin composition. On the contrary, when the content of the melamine-based curing agent exceeds 20 parts by weight, an excessive amount of the added melamine-based curing agent may adversely affect a coating property of the resin coating film since melamine-based curing agent reacts to each other, and the addition of the excessive melamine-based curing agent is undesirable in terms of the crack resistance of a coating film. The flatting agent may be added in a content of 5 to 15 parts by weight, based on 100 parts by weight of the polyester resin. When the content of the flatting agent is less than 5 parts by weight, the very low content of the flatting agent is ineffective to improve the corrosion resistance and gloss of a steel sheet, whereas when the content of the flatting agent exceeds 15 parts by weight, the coating adhesion may be deteriorated. The pigment may be mixed in a content of 5 to 15 parts by weight, based on 100 parts by weight of the polyester resin. The sufficient heat absorption and/or release property of the resin coating film and the high shielding ratio of a base steel sheet may not be achieved when the content of the pigment is less than 5 parts by weight, whereas the coating adhesion and the surface appearance of a resin-coated steel sheet may be deteriorated when the content of the pigment exceeds 15 parts by weight. Also, the titanium compound may be mixed in a content of up to 1.0 part by weight, based on 100 parts by weight of the polyester resin. When the content of the titanium compound exceeds 1.0 part by weight, the coating crack resistance of a resin-coated steel sheet may be degraded. The titanium compound is a component that may be optionally added to the resin composition, and there is no lower limit on the content of the titanium compound. However, the titanium compound is more preferably added in a content of 0.3 or more parts by weight, based on 100 parts by weight of the polyester resin, so as to sufficiently improve the adhesion force of the resin composition by the addition of the titanium compound.

### (Steel sheet surface treatment composition)

In order to improve the adhesion of a resin-coating film to a base steel sheet and/or to surface-treat the base steel sheet, the resin-coated steel sheet may further comprise a steel sheet surface treatment coating film (a lower coating film) formed on a base steel sheet or formed between a base steel sheet and a resin-coating film. The steel sheet surface treatment coating film may be formed of the steel sheet surface treatment composition, and the steel sheet surface treatment composition comprises a silane coupling agent, a metal silicate compound and a titanium compound.

The silane coupling agent functions to chemically bind various organic and inorganic materials since it has 2 different functional groups in its molecule. For example, a methoxy or ethoxy functional group is hydrolyzed with an acid catalyst in an aqueous solution to form silanol (-Si(OH)₃), and the silanol (-Si(OH)₃) forms a bond Si-O-M'(wherein, M is metal) by condensation with an inorganic substance surface. Also, the silanol group more strongly binds to an oxide layer of a steel sheet. Meanwhile, an epoxy group at an end of the silane coupling agent easily binds to other organic substances by means of a ring-opening reaction and/or an amino group also easily binds to other organic substances by means of an amide bond. Therefore, the silane coupling agent functions to enhance the corrosion resistance of a steel sheet by forming a 3-dimensional inorganic polymer chain structure with various organic and inorganic substances. The silane coupling agent may be mixed in a content of 0.5 to 10 parts by weight, preferably 1 to 4 parts by weight, and more preferably 2 to 4 parts by weight of the contents of the other components of the steel sheet surface treatment composition. When the silane coupling agent is mixed with the other components of the resin composition, the resin composition shows balanced corrosion resistance and adhesion. Even when the content of the silane coupling agent exceeds 10 parts by weight, the further addition of the silane coupling agent is uneconomic since the effect on the properties by the resin composition is not further improved, but the quality of a resin-coated steel sheet may be rather deteriorated due to the disadvantages associated with the solution stability. The silane coupling agent is more desirably mixed in a content of 4 or less parts by weight of the resin composition.

Examples of the silane coupling agent include, but are not particularly limited to, 3-aminopropyltriepoxy silane, 3-glycidoxypropyltrimethoxy silane, 3-metaglyoxypropyltrimethoxy silane, N-(β-aminoethyl)-γ-aminopropyltrimethoxysilane, γ-glycidoxypropyltriethoxysilane and γ-glycidoxytrimethyldimethoxysilane. The silane coupling agent may be used alone or in combinations thereof.

The metal silicate compound functions to endow a steel sheet with corrosion resistance since the metal silicate compound may form a 3-D(dimensional) network structure when a steel sheet is coated with the metal silicate compound, and it also has excellent binding affinity to a zinc coating layer and shows a cross-linking effect to bind a zinc coating layer to a resin coating layer. However, when a very small amount of the metal silicate compound is added to the resin composition, the resin composition does not show desired physical properties, whereas when a very high amount of the metal silicate compound is added to the resin composition, the binding affinity of a resin-coating film tends to become weak. Therefore, the metal silicate compound may be mixed in an amount of 1 to 20 parts by weight, preferably 3 to 20 parts by weight, more preferably 1 to 4 parts by weight, and still more preferably 2 to 4 parts by weight of the contents of the other components of the resin composition, so that the resin composition has the optimum cross-linking effect, endows a resin-coated steel sheet to corrosion resistance and has a binding affinity to a resin-coating film. Examples of the metal silicate compound that may be used herein include at least one selected from the group consisting of, but is not particularly limited to, lithium polysilicate, sodium polysilicate, potassium polysilicate and coloidal silica. The metal silicate compound may be used alone or in combinations thereof.

The titanium compound functions to facilitate the cross-linking and curing of the steel sheet surface treatment composition and to improve the corrosion resistance of a surface-treated steel sheet. The titanium compound may be mixed in a content of 0.2 to 8 parts by weight, preferably 1 to 4 parts by weight, more preferably 1 to 2 parts by weight, and still more preferably 0.5-2 parts by weight of the contents of the other components in the steel sheet surface treatment composition, so that the steel sheet surface treatment composition can optimally show the cross-linking and curing characteristics and the corrosion resistance by the addition of the titanium compound. The titanium compound may include, but is not particularly limited to, titanium carbonate, isopropylditriethanolamino titanate, titanium lactate chelate and titanium acetylacetonate. The titanium compound may be used alone or in combinations thereof.

The steel sheet surface treatment composition is an inorganic steel sheet surface treatment composition comprising inorganic components, and shows excellent corrosion resistance, coating adhesion and electroconductivity by itself.

In general, the inorganic components have a good adhesion force to a steel sheet and a resin layer. However, since the inorganic components have poor ductility, cracks may easily occur when deep-drawn parts of a steel sheet are processed. Therefore, it is possible to improve the physical properties such as wetting property of a coating film, fingerprint resistance, workability, ductility, appearance and whiteness by further mixing an organic resin with the steel sheet surface treatment composition comprising the inorganic components.

Therefore, the steel sheet surface treatment composition further comprises a mixture (hereinafter, referred to as 'resin/melanine-based curing agent composition') of a melamine curing agent and at least one resin selected from the group consisting of polyethylene acrylate resin and polyurethane resin.

The resin/melamine-based curing agent composition additionally mixed in the steel sheet surface treatment composition functions to endow a steel sheet with excellent adhesion, workability and ductility, and particularly may prevent coating cracks from occurring in the manufacture of electronic parts since the resin/melamine-based curing agent composition has excellent adhesion to a base steel sheet and an upper resin-coating film. Also, the polyethylene acrylate resin and the polyurethane resin have alkalinity like the inorganic components present in the steel sheet surface treatment composition, and show excellent miscibility with the other components in the steel sheet surface treatment composition, and excellent solution stability. Therefore, the steel sheet surface treatment composition comprising these resins is kept stably even when it is stored for an extended time period, and also is nearly odorless.

In terms of the workability and solution stability, resins having a weight average molecule weight (Mw) of 2,000 to 25,000, preferably 3,000 to 25,000, more preferably 3,000 to 20,000, still more preferably 5,000 to 20,000, and further more preferably 5,000 to 15,000 may be used as the polyethylene acrylate resin and the polyurethane resin. In accordance with one exemplary embodiment of the present invention, a resin having a weight average molecule weight of 10,000 to 25,000 is also preferably used. In particular, a resin having a weight average molecule weight of 10,000 to 25,000 is preferably used as the polyurethane resin. In particular, a polyurethane resin having a number average molecule weight of 10,000 to 25,000 may be used as the resin in a lower coating film of the multiple workability-improved, resin-coated steel sheet.

A melamine-based curing agent is mixed with the at least one resin selected from the group consisting of polyethylene acrylate resin and polyurethane resin. The melamine-based curing agent that may be used herein includes, but is not particularly limited to, melamine, butoxymethyl melamine, hexamethoxymethyl melamine and trimethoxymethyl melamine. The melamine-based curing agent may be used alone or in combinations thereof.

The at least one resin selected from the group consisting of polyethylene acrylate resin and polyurethane resin may be mixed with the melamine-based curing agent so that the one resin and the melamine-based curing agent can be in a weight ratio of 10:1 to 10:7, preferably 10:1 to 10:5, and more preferably 10:2 to 10:4.

In terms of the curing effect, corrosion resistance and solvent resistance of the steel sheet surface treatment composition, it is preferred to mix the melamine-based curing agent with the at least one resin selected from the group consisting of polyethylene acrylate resin and polyurethane resin within the content range.

The resin/melamine-based curing agent composition is mixed in a content of up to 40 parts by weight, preferably 2 to 15 parts by weight, and more preferably 2 to 8 parts by weight of the contents of the other components of the steel sheet surface treatment composition. The resin/melamine-based curing agent composition is optionally added to the steel sheet surface treatment composition, when necessary, in order to further improve the physical properties of the steel sheet surface treatment composition, and there is no lower limit on the content of the resin/melamine-based curing agent composition. However, the resin/melamine-based curing agent composition is preferably added in an amount of 2 or more parts by weight to the steel sheet surface treatment composition, so that the steel sheet surface treatment composition shows effects by the addition of the resin/melamine-based curing agent composition. Also, the resin/melamine-based curing agent composition may be mixed in a content of up to 15 parts by weight in consideration of the electroconductivity and wetting property of the steel sheet surface treatment composition, and the adhesion to an upper coating film.

The resin/melamine-based curing agent composition added to the steel sheet surface treatment composition functions to endow a steel sheet with excellent adhesion, workability and ductility, and particularly may prevent coating cracks from occurring in the manufacture of electronic parts since the resin/melamine-based curing agent composition has excellent adhesion to a base steel sheet and an upper resin-coating film.

The steel sheet surface treatment composition may further comprise phosphate ester so as to further enhance the adhesion to a base steel sheet. The phosphate ester may be mixed in a content of 1.0 to 5.0 parts by weight of the contents of the other components of the steel sheet surface treatment composition. When the content of the phosphate ester is less than 1.0 part by weight, the steel sheet surface treatment composition has an insufficient adhesion force to a base steel sheet and an upper resin-coating film, whereas when the content of the phosphate ester exceeds 5.0 parts by weight, the physical properties of the steel sheet surface treatment composition are not further improved by the increased content of the phosphate ester, and the further addition of the phosphate ester is also uneconomic.

As a binder resin that functions to bind the inorganic components in the steel sheet surface treatment composition, a low molecular weight urethane resin having excellent adhesion to a base steel sheet may be additionally added to the steel sheet surface treatment composition, when necessary. The low molecular weight urethane resin used as the binder resin may degrade the flexibility of resin when it has a high molecular weight. Therefore, according to the present invention a low molecular weight urethane resin having a number average molecule weight of 1,000 or less is used as the binder resin.

When a urethane resin has a lower molecular weight, the urethane resin is more preferred and there is no lower limit on the weight average molecule weight of the urethane resin. The molecular chain of urethane resin may be longer and thus, flexibility of the urethane resin may be degraded with an increasing molecular weight of a urethane resin. The low molecular weight urethane resin is mixed in a content of 20 to 60 parts by weight of the contents of the other components of the steel sheet surface treatment composition. When the content of the low molecular weight urethane resin exceeds 60 parts by weight, the corrosion resistance may be deteriorated due to the very high resin content. However, 20 or more parts by weight of the low molecular weight urethane resin are added to the steel sheet surface treatment composition so as to show sufficient effects by the addition of the urethane resin.

Additional additives such as an antifoaming agent, a wetting agent may be further added to the steel sheet surface treatment composition, when necessary, so as to improve the coatability of the steel sheet surface treatment composition. These additives are widely known to those skilled in the art, and may be suitably selected and used in the art, when necessary. The steel sheet surface treatment composition may be prepared by adding the above-mentioned contents of the respective components to pure water and mixing the respective components with each other.

The steel sheet surface treatment composition includes, but is not particularly limited to, 1 to 4 parts by weight of a silane coupling agent, 1 to 4 parts by weight of a metal silicate compound and 1 to 4 parts by weight of a titanium compound. For example, the steel sheet surface treatment composition may be prepared, which comprises 1 to 4 parts by weight of a silane coupling agent, 1 to 4 parts by weight of a metal silicate compound, 1 to 4 parts by weight of a titanium compound, and the balance of pure water, based on 100 parts by weight of the steel sheet surface treatment composition, but the present invention is not particularly limited thereto. Also as described above, the steel sheet surface treatment composition comprise a resin/melamine-based curing agent composition, a phosphate ester and/or a low molecular weight urethane in the above-mentioned content ranges, based on 100 parts by weight of the steel sheet surface treatment composition.

The solid content of the steel sheet surface treatment composition is preferably adjusted to a content of 8 to 20 % by weight, and preferably 10 to 16 % by weight. When the solid content of the steel sheet surface treatment composition is less than 8 % by weight, a steel sheet may not be coated with a suitable amount of a lower coating film, whereas the storage stability and workability of the steel sheet surface treatment composition may be deteriorated when the solid content of the steel sheet surface treatment composition exceeds 20 % by weight. A viscosity of the steel sheet surface treatment composition is preferably in a range of 4 to 10 cps. The steel sheet surface treatment composition shows excellent roll-coating workability when the viscosity of the steel sheet surface treatment composition is within this viscosity range. When the viscosity of the steel sheet surface treatment composition is less than 4 cps, a steel sheet may not be coated with a suitable amount of a lower coating film, whereas the storage stability and workability of the steel sheet surface treatment composition may be deteriorated when viscosity of the steel sheet surface treatment composition exceeds 10 cps.

Except for the components added to the steel sheet surface treatment composition, the balance is pure water, and the solid content and viscosity of the steel sheet surface treatment composition may be adjusted with pure water. When the resin/melamine-based curing agent composition is additionally added to the steel sheet surface treatment composition, it is preferred to separately prepare an inorganic solution comprising a silane coupling agent, a metal silicate compound and a titanium compound, and a resin composition comprising a polyurethane resin and a melamine-based curing agent and mix the inorganic solution with the resin composition, in term of the easy manufacture and the storage stability of the steel sheet surface treatment composition.

Additives such as an antifoaming agent may be further mixed with the components of the steel sheet surface treatment composition, when necessary. These additives have been widely known in the art, and may be used in a suitable mixing ratio by those skilled in the art, when necessary.

The steel sheet surface treatment composition comprises 1 to 4 parts by weight of a silane coupling agent, 1 to 4 parts by weight of a metal silicate compound and 1 to 4 parts by weight of a titanium compound. Preferably, the steel sheet surface treatment composition comprises 1 to 4 parts by weight of a silane coupling agent, 1 to 4 parts by weight of a metal silicate compound, 1 to 4 parts by weight of a titanium compound and the balance of pure water, based on 100 parts by weight of the steel sheet surface treatment composition. Also as described above, the steel sheet surface treatment composition comprises a resin/melamine-based curing agent composition in the above-mentioned content, based on 100 parts by weight of the steel sheet surface treatment composition.

Except for the components added to the steel sheet surface treatment composition, the balance is pure water, and the solid content and viscosity of the steel sheet surface treatment composition may be adjusted by using pure water.

Meanwhile, when the resin-curing agent composition is additionally added to the steel sheet surface treatment composition, it is preferred to separately prepare an inorganic solution comprising a silane coupling agent, a metal silicate compound and a titanium compound and mix the inorganic solution with the resin-curing agent composition.

Hereinafter, the steel sheet surface treatment composition provided according to one exemplary embodiment of the present invention is described in more detail. Except for the detailed description of the steel sheet surface treatment composition as described later, the same components of the steel sheet surface treatment composition are applicable in the same manner.

### (Steel sheet surface treatment composition for a steel sheet comprising a fingerprint resistance-improving resin-coating film)

In accordance with one exemplary embodiment of the present invention, a steel sheet surface treatment composition comprising 5 to 15 parts by weight of a polyurethane resin/melamine-based curing agent composition, 1 to 4 parts by weight of a silane coupling agent, 1 to 4 parts by weight of a metal silicate compound and 1 to 4 parts by weight of a titanium compound is provided.

In consideration of the adhesion force, adhesion and corrosion resistance, the polyurethane resin/melamine-based curing agent composition is preferably mixed in a content of 5 to 15 parts by weight of the contents of the other components of the steel sheet surface treatment composition. In terms of the corrosion resistance and solvent resistance of a steel sheet surface treatment coating film, the polyurethane resin/melamine-based curing agent composition is preferably used as a composition of a polyurethane resin and a melamine-based curing agent, which is prepared by mixing the polyurethane resin with the melamine-based curing agent so that the polyurethane resin and the melamine-based curing agent can be mixed in a weight ratio of 10:1 to 10:7. As the polyurethane resin, a resin having a weight average molecule weight of 10,000 to 25,000 is preferably used in terms of the solvent resistance of a steel sheet surface treatment coating film and the storage stability. The silane coupling agent is preferably mixed in a content of 1 to 4 parts by weight of the contents of the other components of the steel sheet surface treatment composition in terms of the corrosion resistance and solution stability. The metal silicate compound is preferably mixed in a content of 1 to 4 parts by weight of the contents of the other components of the steel sheet surface treatment composition in terms of the cross-linking property, corrosion resistance and the adhesion to a resin-coating film. The titanium compound is preferably mixed in a content of 1 to 4 parts by weight of the contents of the other components of the steel sheet surface treatment composition, so that the steel sheet surface treatment composition optimally shows the cross-linking and curing characteristics and the corrosion resistance by the addition of the titanium compound.

### (Steel sheet surface treatment composition for a steel sheet comprising an electroconductive resin-coating film)

The steel sheet surface treatment composition provided according to one exemplary embodiment of the present invention comprises 1 to 4 parts by weight of a silane coupling agent, 1 to 4 parts by weight of a metal silicate compound and 1 to 4 parts by weight of a titanium compound. The silane coupling agent may be mixed in a content of 1 to 4 parts by weight, and preferably 2 to 4 parts by weight of the contents of the other components of the steel sheet surface treatment composition in terms of the corrosion resistance and solution stability of the steel sheet surface treatment composition. The metal silicate compound may be mixed in a content of 1 to 4 parts by weight, and preferably 2 to 4 parts by weight of the contents of the other components of the steel sheet surface treatment composition in consideration of the cross-linking property, corrosion resistance, and the adhesion to a resin-coating film. The titanium compound may be mixed in a content of 1 to 4 parts by weight, and preferably 0.5 to 2 parts by weight of the contents of the other components of the steel sheet surface treatment composition, so that the steel sheet surface treatment composition can optimally show the cross-linking and curing characteristics and the corrosion resistance by the addition of the titanium compound.

Therefore, the steel sheet surface treatment composition may further comprise a mixture of a melamine curing agent and at least one resin selected from the group consisting of polyethylene acrylate resin and polyurethane resin(a resin/melamine-based curing agent composition), when necessary.

In terms of the workability and solution stability of the steel sheet surface treatment composition, resins having a weight average molecule weight (Mw) of 2,000 to 25,000, preferably 3,000 to 25,000, more preferably 3,000 to 20,000, and still more preferably 5,000 to 15,000 may be used as the polyethylene acrylate resin and the polyurethane resin.

The at least one resin selected from the group consisting of polyethylene acrylate resin and polyurethane resin, and the melamine-based curing agent may be mixed in a weight ratio of 10:1 to 10:7, preferably 10:1 to 10:5, and more preferably 10:2 to 10:4 in terms of the curing property, corrosion resistance and solvent resistance. The resin/melamine-based curing agent composition may be mixed in a content of up to 15 parts by weight, preferably 2 to 15 parts by weight, and more preferably 2 to 8 parts by weight of the contents of the other components of the steel sheet surface treatment composition in terms of electroconductivity and wetting property of the steel sheet surface treatment composition, and the adhesion to an upper coating film.

### (Steel sheet surface treatment composition for a multiple workability-improving steel sheet)

In accordance with one exemplary embodiment of the present invention, a steel sheet surface treatment composition (hereinafter, referred to as a 'multiple-workable steel sheet surface treatment composition'), which is applied to a resin-coated steel sheet comprising a resin-coating film that is formed of the multiple workability-improving resin composition on a base steel sheet, is provided. The multiple-workable steel sheet surface treatment composition comprises 25 to 40 parts by weight of a composition of a polyurethane resin and a melamine-based curing agent, 3 to 20 parts by weight of a metal silicate compound, 0.5 to 10 parts by weight of a silane compound, 0.2 to 8 parts by weight of a titanium compound and 1 to 5 parts by weight of phosphate ester, wherein the polyurethane resin has a number average molecule weight of 10,000 to 25,000.

Among the components of the steel sheet surface treatment composition for a multiple workability-improving steel sheet, a polyurethane resin having a number average molecule weight of 10,000 to 25,000 is preferably used as the polyurethane resin in the polyurethane resin/melamine-based curing agent composition. When the number average molecule weight of the polyurethane resin is less than 10,000, the solvent resistance to a steel sheet surface treated coating film is insufficiently achieved, whereas the storage stability of the steel sheet surface treatment composition is insufficiently achieved when the number average molecule weight of the polyurethane resin exceeds 25,000.

The polyurethane resin/melamine-based curing agent composition may be mixed in a content of 25 to 40 parts by weight of the contents of the other components of the steel sheet surface treatment composition. When the content of the polyurethane resin/melamine-based curing agent composition is less than 25 parts by weight, the adhesion to an upper coating film is insufficiently achieved, whereas it is undesirable in terms of the corrosion resistance due to the increase in contents of organic substances when the content of the polyurethane resin/melamine-based curing agent composition exceeds 40 parts by weight.

The metal silicate compound may be mixed in a content of 3 to 20 parts by weight of the contents of the other component of the steel sheet surface treatment composition. When the content of the silicate compound is less than 3 parts by weight, the steel sheet surface treatment composition has a weak adhesion force to a steel sheet, and does not show excellent corrosion resistance. When the content of the silicate compound exceeds 20 parts by weight, it is undesirable due to the weak binding affinity to an upper resin layer.

The silane compound may be mixed in a content of 0.5 to 10 parts by weight of the content of the other components of the steel sheet surface treatment composition. When the content of the silane compound is less than 0.5 parts by weight, the steel sheet surface treatment composition has a weak adhesion force to a base steel sheet, and does not show excellent corrosion resistance. Even when the content of the silane compound exceeds 10 parts by weight, the steel sheet surface treatment composition does not have an effect to further improve the physical properties. Therefore, the addition of the excessive silane compound is uneconomic, and the quality of a steel sheet may be rather deteriorated due to the disadvantages associated with the solution stability.

The titanium compound is preferably mixed in a content of 0.2 to 8 parts by weight of the contents of the other components of the steel sheet surface treatment composition, so that the steel sheet surface treatment composition can optimally show the cross-linking, curing characteristics and the corrosion resistance by the addition of the titanium compound. When the content of the titanium compound is less than 0.2 parts by weight, the corrosion resistance may be deteriorated. On the contrary, when the content of the titanium compound exceeds 8 parts by weight, the addition of the excessive titanium compound is uneconomic since it does not allow the steel sheet surface treatment composition to have an effect to further improve the physical properties.

The phosphate ester may be mixed in a content of 1.0 to 5.0 parts by weight of the contents of the other components of the steel sheet surface treatment composition. When the content of the phosphate ester is less than 1.0 part by weight, the steel sheet surface treatment composition has an insufficient adhesion force to a base steel sheet and an upper resin-coating film, whereas when the content of the phosphate ester exceeds 5.0 parts by weight, the addition of the excessive phosphate ester is uneconomic since it does not allow the steel sheet surface treatment composition to have an effect to further improve the physical properties.

Except for the description in connection to the steel sheet surface treatment composition for a multiple workability-improving steel sheet, the description in steel sheet surface treatment composition is applicable in the same manner.

### (Steel sheet)

Hereinafter, a method for treating a base steel sheet using the steel sheet surface treatment composition and the resin composition, and a steel sheet according to one exemplary embodiment of the present invention prepared using the same are described in more detail. The resin-coated steel sheet according to the present invention comprises a resin-coating film formed on at least one out of first and second surfaces of a base steel sheet. Here, the resin-coated steel sheet may be endowed with desired physical properties, depending on the use and desired physical properties of the resin-coated steel sheet based on the components and their contents of the resin composition used to form the resin-coating film. Any one resin composition selected from the group consisting of the resin composition, the fingerprint-resistant resin composition, the conductivity-improving resin composition and the multiple workability-improving resin composition, as described above, may be applied to the resin-coated steel sheet according to one exemplary embodiment of the present invention.

The resin-coated steel sheet according to one exemplary embodiment of the present invention comprises a resin-coating film formed of the resin composition on at least one out of first and second surfaces of a base steel sheet. Here, the resin-coated steel sheet shows excellent steel characteristics, more particularly electroconductivity, electrostatic earth property, fingerprint resistance, corrosion resistance, solvent resistance, workability, press formability, workability at multi-processed part, electromagnetic shielding property, adhesion and/or heat release property, due to the presence of the resin-coating film.

In accordance with one exemplary embodiment of the present invention, the resin composition may be applied to at least one out of first and second surfaces of a base steel sheet. That is, the resin composition may be applied to either a first surface or a second surface of a base steel sheet, or applied to both of the first and second surfaces of the base steel sheet, thus to form a resin-coating film.

A galvanized steel sheet may be used as the base steel sheet. Examples of the galvanized steel sheet that may be used herein include, but are not particularly, limited to, a galvanized steel sheet (GI), a galvannealed steel sheet (GA) and an electrogalvanized steel sheet (EG).

A resin coating film (referred as a 'upper coating film' in the specification) is formed by coating a first surface and/or a second surface of a base steel sheet with the resin composition and drying the base steel sheet.

Also described herein, the resin-coating film may be formed so that it can have a dry coating thickness of 5 to 40*µ*m (micrometers), preferably 5 to 30 *µ*m (micrometers). For example of 8 to 30 *µ*m (micrometers), preferably 5 to 20 *µ*m (micrometers), preferably 5 to 15*µ*m (micrometers), more preferably 7 to 15*µ*m (micrometers), and still more preferably 8 to 15 *µ*m (micrometers). When the dry coating thickness of the resin-coating film is less than 5 *µ*m (micrometers), the shielding force and solvent resistance of the resin-coating film are poor, but when the dry coating thickness of the resin-coating film exceeds 40 *µ*m (micrometers), it is undesirable due to the high manufacturing cost and the low productivity. The thickness of the resin-coating film may be varied according to the desired physical properties of the resin-coated steel sheet. In accordance with one aspect, a resin-coating film may have a thickness of 5 to 20 *µ*m (micrometers) in the case of the fingerprint-resistant, resin-coated steel sheet. In accordance with another aspect, a resin-coating film may have a thickness of 5 to 40 *µ*m (micrometers) in the case of the electroconductive resin-coated steel sheet. In accordance with still another aspect, a resin-coating film may have a thickness of 8 to 40 *µ*m (micrometers) in the case of the multiple workability-improving resin-coated steel sheet.

A first surface and/or a second surface of a base steel sheet; or a steel sheet surface treatment coating film as described later may be coated with the resin composition using any one of conventional method widely known in the art, but the present invention is not particularly limited thereto. For example, a bar coater, roll coater or curtain coater method may be used as the conventional method.

The drying of the coated resin composition may also be carried out using any one of conventional methods widely known in the art. The drying of the resin composition may be carried out using a hot blast heating system, an infrared heating system or an induction heating system, but the present invention is not particularly limited thereto.

The resin composition is preferably dried at a peak metal temperature (PMT) of 180 to 260°C (degrees centigrade), and preferably 180 to 240°C (degrees centigrade). In the case of the hot blast heating system, for example, the resin composition may be dried at an ambient temperature of 200 to 340°C (degrees centigrade) for 10 to 50 seconds with hot air, but the present invention is not particularly limited thereto. In the case of the induction heating system, the resin composition may be dried at a frequency range of 5 to 50 MHz and a power of 3 to 15 KW (kilowatts) for 5 to 20 seconds.

Meanwhile, the resin-coated steel sheet further comprises a steel sheet surface treatment coating film (hereinafter, referred to as a 'lower coating film') formed on the first surface and/or second surface of the base steel sheet so as to endow a steel sheet with corrosion resistance, workability, electromagnetic shielding property, as well as the adhesion of a resin-coating film to the base steel sheet. The lower coating film functions to enhance the adhesion of the resin-coating film to the base steel sheet, and also to endow a steel sheet to workability, corrosion resistance, electromagnetic shielding property. The lower coating film may be further formed on at least one out of the first and second surfaces of the base steel sheet, when necessary, regardless of whether the resin coating film is formed on the base steel sheet. Also, the lower coating film may be formed between the base steel sheet and the resin-coating film when the resin-coating film is formed. The steel sheet surface treatment coating film (a lower coating film) may be formed of any one steel sheet surface treatment composition selected from the group consisting of the steel sheet surface treatment composition, the steel sheet surface treatment composition for a steel sheet comprising a fingerprint resistance-improving resin-coating film, the steel sheet surface treatment composition for a steel sheet comprising an electroconductivity-improving resin-coating film, and the steel sheet surface treatment composition for a multiple workability-improving steel sheet.

In accordance with another exemplary embodiment of the present invention, when the resin-coating film is formed only on one surface of the base steel sheet, a lower coating film is preferably formed on the other surface of the base steel sheet on which the resin-coating film is not formed in consideration of the workability, corrosion resistance, electroconductivity of a steel sheet, etc. In accordance with one exemplary embodiment of the present invention, a steel sheet having improved electroconductivity is provided, wherein the steel sheet comprises a base steel sheet, lower coating films formed on both surfaces of the base steel sheet, and an electroconductive resin-coating film formed on one surface of the lower coating films. Meanwhile, in the case of the steel sheet comprising the electroconductive resin-coating film (an upper coating film), the lower coating film is disposed between the base steel sheet and the electroconductive resin-coating film (an upper coating film).

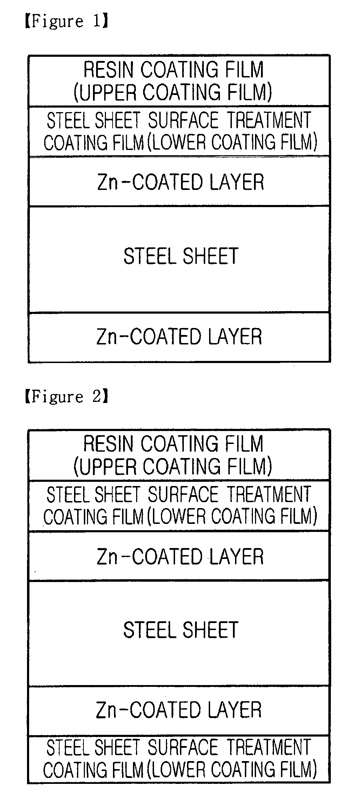

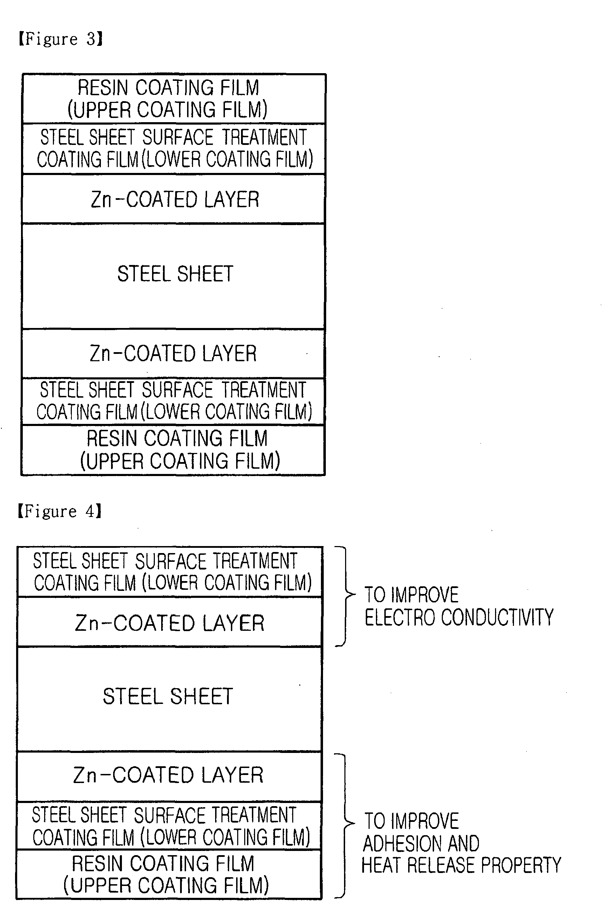

FIGS. 1 to 3 are side cross-sectional views illustrating a steel sheet comprising a resin coating film that is formed of the resin composition. FIG. 1 is a side cross-sectional view illustrating a steel sheet according to one exemplary embodiment of the present invention comprising a base steel sheet; and a lower coating film and a resin-coating film, both of which are formed on a first surface of the base steel sheet, FIG. 2 is a side cross-sectional view illustrating a steel sheet according to one exemplary embodiment of the present invention comprising a base steel sheet; a lower coating film and a resin-coating film, both of which are formed on a first surface of the base steel sheet; and a lower coating film formed on a second surface of the base steel sheet, and FIG. 3 is a side cross-sectional view illustrating a steel sheet according to one exemplary embodiment of the present invention comprising a base steel sheet; and a lower coating film and a resin-coating film, both of which are formed on both of first and second surfaces of the base steel sheet.

The steel sheet surface treatment composition is applied to a first surface and/or a second surface of a base steel sheet to form a lower coating film. Here, the lower coating film functions to endow a steel sheet with fingerprint resistance, corrosion resistance, workability, solvent resistance, electromagnetic shielding effectiveness, electroconductivity, as well as the adhesion between the base steel sheet and the electroconductive resin-coating film. In connection with the endowment of the steel sheet with these physical properties, the steel sheet surface treatment composition may be applied, in a coating content of 3,000 mg/m² (milligrams/square meter) or less, preferably 800 to 3,000 mg/m² (milligrams/square meter), more preferably 800 to 2,000 mg/m² (milligrams/square meter), still more preferably 800 to 1,800 mg/m² (milligrams/square meter), and further more preferably 800 to 1,200 mg/m² (milligrams/square meter), to the first surface and/or second surface of the base steel sheet. Since the steel sheet surface treatment composition is optionally applied to the steel sheet, when necessary, there is no lower limit on the coating content of the steel sheet surface treatment composition. In order to improve properties such as adhesion and corrosion resistance by the coating with the steel sheet surface treatment composition, the steel sheet surface treatment composition is preferably applied to a base steel sheet in a coating content of 800 mg/m² (milligrams/square meter) or more. In consideration of the adhesion to a resin-coating film (an upper coating film), and the workability and heat release property, the steel sheet surface treatment composition is applied to a steel sheet in a coating content of up to 3,000 mg/m² (milligrams/square meter).

In consideration of the adhesion force to a resin-coating film, the corrosion resistance, solvent resistance, fingerprint resistance, electromagnetic shielding property and workability, the lower coating film is formed so that it can have a dry coating thickness of 0.5 to 3 *µ*m (micrometers), more preferably 0.5 to 2 *µ*m (micrometers), and still more preferably 1 to 2 *µ*m (micrometers). Since the steel sheet further comprises the lower coating film, there is no lower limit on the thickness of the lower coating film. However, the lower coating film preferably has a dry coating thickness of 0.5 *µ*m (micrometers) or more in order to show the adhesion and corrosion resistance. When the dry coating thickness of the lower coating film exceeds 3 *µ*m (micrometers), the electroconductivity of the steel sheet surface treatment composition may be deteriorated. The dry coating thickness of the lower coating film is associated with the coating content of the steel sheet surface treatment composition. In accordance with another exemplary embodiment of the present invention, a lower coating film may also be formed so that it can have a dry coating thickness of 0.8 to 3 *µ*m (micrometers), and preferably 0.8 to 2*µ*m (micrometers). The thickness of the lower coating film may be varied according to the desired physical properties of the resin-coated steel sheet. In accordance with one exemplary embodiment of the present invention, a lower coating film of the fingerprint-resistant, resin-coated steel sheet may have a thickness of 0.5 to 2 *µ*m (micrometers). In accordance with anther exemplary embodiment of the present invention, a lower coating film of the electroconductive resin-coated steel sheet may have a thickness of 0.5 to 2 *µ*m (micrometers). In accordance with still another exemplary embodiment of the present invention, a lower coating film of the multiple workability-improving resin-coated steel sheet may have a thickness of 0.8 to 3 *µ*m (micrometers), preferably 0.8 to 2.0 *µ*m (micrometers), and more preferably 0.8 to 1.5*µ*m (micrometers).

Like the above-mentioned electroconductive resin composition, the steel sheet surface treatment composition may be applied to a base steel sheet using one of the conventional methods widely known in the art, but the present invention is not particularly limited thereto. For example, a bar coater, roll coater or curtain coater method may be used as the conventional method. Like the above-mentioned resin composition, the drying of the coated steel sheet surface treatment composition may also be carried out using any one of the conventional methods widely known in the art. The drying of the steel sheet surface treatment composition may be carried out using a hot blast heating system, an infrared heating system or an induction heating system, but the present invention is not particularly limited thereto.

In terms of the drying efficiency, the coating of the steel sheet surface treatment composition is preferably dried at a peak metal temperature (PMT) of 120 to 180°C (degrees centigrade), preferably 130 to 180°C (degrees centigrade), and more preferably 150 to 180°C (degrees centigrade) or 140 to 170°C (degrees centigrade). In the case of the hot blast heating system, for example, the steel sheet surface treatment composition may be dried at an ambient temperature of 160 to 340°C (degrees centigrade) for 5 to 20 seconds with hot air, but the present invention is not particularly limited thereto. In the case of the induction heating system, the steel sheet surface treatment composition may also be dried at a frequency range of 5 to 50 MHz and a power of 3 to 15 KW (kilowatts) for 3 to 15 seconds.

The resin-coated steel sheet provided according to one exemplary embodiment of the present invention may comprise: (1) ① a base steel sheet, and ② an electroconductivity coating film formed on at least one out of the front and rear surfaces of the base steel sheet; and comprise:(2)① a base steel sheet, ② a lower coating film (a lower coating film) formed on formed on at least one out of first and second surfaces of the base steel sheet, and ③ an electroconductive resin-coating film (an upper coating film) formed on one surface of the base steel sheet on which the lower coating film is not formed, or on a first surface and/or a second surface of the lower coating film. For the electroconductive resin-coated steel sheet according to one exemplary embodiment of the present invention, for example, a lower coating film, an upper coating film and a base steel sheet may be stacked in a sequence of: a first surface upper coating film/a base steel sheet; a first surface upper coating film/a first surface lower coating film/a base steel sheet (FIG. 1); a first surface upper coating film/a first surface lower coating film/a base steel sheet /a second surface lower coating film (FIG. 2); a first surface upper coating film/a first surface lower coating film/a base steel sheet /a second surface upper coating film; a first surface upper coating film/a base steel sheet /a second surface lower coating film; a first surface upper coating film/a base steel sheet /a second surface lower coating film/a second surface upper coating film; a first surface lower coating film/a base steel sheet /a second surface upper coating film; a base steel sheet /a second surface lower coating film/a second surface upper coating film; and a first surface upper coating film/a first surface lower coating film/a base steel sheet /a second surface lower coating film/a second surface upper coating film (FIG. 3).

In accordance with one exemplary embodiment of the present invention, a lower coating film that is further formed on a first surface and/or a second surface of a base steel sheet may be any generally known a coating film that functions to enhance the adhesion force between the resin-coating film and the base steel sheet and endow a steel sheet with physical properties, such as paintability, corrosion resistance, which are required for the steel sheet, and the present invention is not particularly limited thereto. For example, the lower coating film may be formed of any one of the above-mentioned steel sheet surface treatment compositions, but the present invention is not particularly limited thereto.

In accordance with another exemplary embodiment of the present invention, a steel sheet comprising differentiated steel sheet surface treatment coating films formed on both surfaces thereof is provided in consideration of the electroconductivity and heat release property of the steel sheet and the coating adhesion. Hereinafter, the steel sheet comprising differentiated steel sheet surface treatment coating films is described in more detail.

That is, in accordance with another exemplary embodiment of the present invention, a resin-coated steel sheet, which comprises a base steel sheet, differentiated steel sheet surface treatment coating films (lower coating films) formed of the steel sheet surface treatment composition on both surfaces (first and second surfaces) of the base steel sheet, and a resin-coating film formed on a steel sheet surface treatment coating film that is formed on the second surface of the base steel sheet, is also provided. The resin-coated steel sheet comprising the differentiated steel sheet surface treatment coating film provided according to one exemplary embodiment of the present invention comprises lower coating films formed on the first and second surfaces of the base steel sheet, wherein the lower coating films are formed with differentiated compositions, coating contents, thickness and viscosity. Also, the resin-coating film is formed only on the steel sheet surface treatment coating film formed on the second surfaces of the base steel sheet. Among a variety of the physical properties of the steel sheet, the electroconductivity of the steel sheet is achieved in a first steel sheet surface of a resin-coated steel sheet, and the heat release property, adhesion, workability, electromagnetic shielding effectiveness, corrosion resistance, chemical resistance are achieved in a second steel sheet surface, wherein the resin-coated steel sheet (hereinafter, referred to as a 'differentiated resin-coated steel sheet') comprises differentiated treatment coating films formed on the first and second surfaces of the base steel sheet, and a resin-coating film formed only on the steel sheet surface treatment coating film that is formed on the second surface of the base steel sheet. In manufacturing the differentiated resin-coated steel sheet, the resin-coating film may be formed of any one of the above-mentioned resin compositions such as the resin composition, the fingerprint-resistant resin composition, the conductivity-improving resin composition and the multiple workability-improving resin composition, and the lower coating film may be formed of any one of the above-mentioned steel sheet surface treatment compositions such as the steel sheet surface treatment composition, the steel sheet surface treatment composition for a steel sheet comprising a fingerprint resistance-improving resin-coating film, the steel sheet surface treatment composition for a steel sheet comprising an electroconductivity-improving resin-coating film, and the steel sheet surface treatment composition for a multiple workability-improving steel sheet.

Meanwhile, when the differentiated lower coating film is formed on the base steel sheet, the steel sheet surface treatment composition applied to the first surface of the base steel sheet and the steel sheet surface treatment composition applied to the second surface of the base steel sheet comprise the resin/melamine-based curing agent composition with different content as described later.

That is, the resin/melamine-based curing agent composition may be mixed in a content of up to 2 parts by weight in the steel sheet surface treatment composition applied to the first base steel sheet. There is no lower limit on the content of the resin/melamine-based curing agent composition that is optionally mixed, when necessary. In this case, the resin/melamine-based curing agent composition is preferably mixed in a content of 1 or more part by weight in the steel sheet surface treatment composition applied to the first surface of the base steel sheet so as to achieve effects by the addition of the resin/melamine-based curing agent composition. However, when the content of the resin/melamine-based curing agent composition exceeds 2 parts by weight, the first surface of the base steel sheet coated with the steel sheet surface treatment composition has insufficient electroconductivity. Meanwhile, the resin/melamine-based curing agent composition may be mixed in a content of up to 8 parts by weight in the steel sheet surface treatment composition applied to the second surface of the base steel sheet. There is no lower limit on the content of the resin/melamine-based curing agent composition that is optionally mixed, when necessary. In this case, the resin/melamine-based curing agent composition is preferably mixed in a content of 2 or more part by weight in the steel sheet surface treatment composition applied to the second surface of the base steel sheet so as to achieve effects by the addition of the resin/melamine-based curing agent composition. Also, the resin/melamine-based curing agent composition is preferably mixed in a content of up to 8 parts by weight in the steel sheet surface treatment composition in consideration of the wetting property and the adhesion to an upper coating film.

In consideration of the electroconductivity of the first surface of the base steel sheet, the organic resin/melamine-based curing agent composition is mixed in a smaller content in the steel sheet surface treatment composition applied to the first surface of the base steel sheet than in the steel sheet surface treatment composition applied to the second surface of the base steel sheet.

Also, the steel sheet surface treatment compositions applied respectively to the first and second surfaces of the base steel sheet have different solid contents and viscosities. The steel sheet surface treatment composition applied to the first surface of the base steel sheet comprises a large amount of inorganic components, and is used to endow the base steel sheet with electroconductivity. Therefore, the steel sheet surface treatment composition applied to the first surface of the base steel sheet is prepared with smaller solid content and lower viscosity than the steel sheet surface treatment composition applied to the second surface of the base steel sheet, so that the first surface of the base steel sheet can show better electroconductivity than the second surface of the base steel sheet. More particularly, the steel sheet surface treatment composition applied to the first surface of the base steel sheet has a solid content of 6 to 14 % by weight, and preferably 8 to 12 % by weight. Also, the steel sheet surface treatment composition applied to the first surface of the base steel sheet has a viscosity of 4 to 8 cps.

The steel sheet surface treatment composition applied to the second surface of the base steel sheet is an organic/inorganic composition that is used to show improved adhesion and adherence to a subsequently applied resin composition. Therefore, the steel sheet surface treatment composition applied to the second surface of the base steel sheet is prepared with higher solid content and viscosity, compared to the steel sheet surface treatment composition applied to the first surface of the base steel sheet. More particularly, the steel sheet surface treatment composition applied to the second surface of the base steel sheet has a solid content of 9 to 18 % by weight, and preferably 12 to 16 % by weight. Also, the steel sheet surface treatment composition applied to the second surface of the base steel sheet has a viscosity of 6 to 10 cps in consideration of the corrosion resistance and coating adhesion.

The first surface of the base steel sheet is coated with 400 to 1,400 mg/m² (milligrams/square meter), preferably 400 to 1,200 mg/m² (milligrams/square meter), and more preferably 400 to 800 mg/m² (milligrams/square meter) of the steel sheet surface treatment composition, and the second surface of the base steel sheet is coated with 800 to 2,000 mg /m² (milligrams/square meter), preferably 800 to 1,800 mg/m² (milligrams/square meter), more preferably 800 to 1,200 mg/m² (milligrams/square meter), and still more preferably 800 to 1,200 mg/m² (milligrams/square meter) of the steel sheet surface treatment composition. In this case, the second surface of the base steel sheet is coated with a higher coating amount of the steel sheet surface treatment composition, compared to the first surface of the base steel sheet. That it, the first surface of the base steel sheet is coasted with 400 to 1,400 mg/m² (milligrams/square meter), which is smaller than the coating amount of the steel sheet surface treatment to the second surface of the base steel sheet so as to secure electroconductivity.

When the first surface of the base steel sheet is coated with the coating amount of the steel sheet surface treatment composition, it is desirable in terms of the corrosion resistance and electroconductivity. When steel sheet surface treatment composition is applied in a coating content of 800 to 2,000 mg/m² (milligrams/square meter) to the second surface of the base steel sheet, it is desirable in terms of the adhesion to a resin-coating film (an upper coating film), workability and heat release property.

A steel sheet surface treatment coating film may be formed of the steel sheet surface treatment composition on the first surface of the base steel sheet so that the steel sheet surface treatment composition can have a dry coating thickness of 0.4 to 1.5 *µ*m (micrometers), and preferably 0.4 to 1.0 *µ*m (micrometers) to the first surface of the base steel sheet in consideration of the corrosion resistance and electroconductivity, and a steel sheet surface treatment coating film may also be formed of the steel sheet surface treatment composition on the second surface of the base steel sheet so that the steel sheet surface treatment composition can have a dry coating thickness of 0.5 to 2 *µ*m (micrometers), and preferably 1 to 2 *µ*m (micrometers) in consideration of the adhesion force to a resin-coating film and the workability. Also, the steel sheet surface treatment coating film formed on the second surface of the base steel sheet has a higher dry coating thickness than the steel sheet surface treatment coating film formed on the first surface of the base steel sheet.

Each of the first and second surfaces of the base steel sheet is coated with the coating amount of the steel sheet surface treatment composition, and dried to form a steel sheet surface treatment coating film. Then, a resin-coating film is formed on the steel sheet surface treatment coating film formed on the second surface of the base steel sheet.

The resin-coating film is formed with a dry coating thickness of 5 to 30 *µ*m (micrometers), preferably 5 to 20 *µ*m (micrometers), more preferably 5 to 15 *µ*m (micrometers), and still more preferably 7 to 15 *µ*m (micrometers). The formation of the resin-coating film with the dry coating thickness is desirable in terms of the electroconductivity, as well as the shielding force of a resin-coating film, the workability and the solvent resistance.

As described above, differentiated steel sheet surface treatment coating films may be formed on the first and second surfaces of the base steel sheet, and a resin-coating film may be formed on the steel sheet surface treatment coating film formed on the second surface of the steel sheet using any one of the resin compositions. The resin coating film may be formed according to any of the conditions and methods as described in the resin-coating film (an upper coating film).

In accordance with another exemplary embodiment of the present invention, provided is also a steel sheet which has excellent physical properties such as heat release property, adhesion, workability, electromagnetic shielding effectiveness, corrosion resistance, chemical resistance as well as the surface electroconductivity and is environment-friendly since the steel sheet does not contain chromium. FIG. 4 is a side cross-sectional view illustrating a differentiated resin-coated steel sheet provided according to one exemplary embodiment of the present invention.

The steel sheet according to one exemplary embodiment of the present invention is suitably used for panels for electronic equipment, particularly for panels for image display equipment, and more particularly for display panels. Here, a surface of the steel sheet having only a steel sheet surface treatment coating film formed therein may be used as an inward facing surface for a display panel, and the other surface of the steel sheet having a steel sheet surface treatment coating film and a resin-coating film formed therein may be used as an outward facing surface for a display panel. In the steel sheet according to one exemplary embodiment of the present invention, the steel sheet surface treatment coating film is environment-friendly since it does not contain chromiun. As the resin-coating film of the steel sheet gets blackish, the resin-coating film shows excellent heat absorption and/or heat release property. The steel sheet according to one exemplary embodiment of the present invention may be sued as a steel sheet for high-grade electric home appliances such as a display panel, which have been increasingly used due to the good appearance.

The resin-coated steel sheet according to one exemplary embodiment of the present invention has good appearance, as well as the excellent physical properties such as electroconductivity, electrostatic earth property, fingerprint resistance, corrosion resistance, solvent resistance, workability, press formability, workability at multi-processed part, electromagnetic shielding property, adhesion and heat release property. Furthermore, the according to one exemplary embodiment of the present invention shows the same heat absorption and/or heat release properties as the conventional PCM-coated steel sheet although a resin-coating film is formed with a thinner thickness then that of the conventional PCM-coated steel sheet. Therefore, the resin-coated steel sheet according to one exemplary embodiment of the present invention is suitably used to manufacture exterior panels for electric home appliances, particularly to manufacture high-grade panels in the field of applications such as electric home appliances, which has been widely used with a rapidly growing demand.

### [Mode for Invention]

### I. Fingerprint-resistant, resin-coated steel sheet

### 1. Base steel sheet

An electrogalvanized steel (EG) whose both surfaces are coated with zinc (Zn) in a coating content of 20 g/m² (grams/square meter) per one surface was used as a base steel sheet.

### 2. Steel sheet surface treatment composition and resin composition

### (1) Steel sheet surface treatment composition

A steel sheet surface treatment composition was prepared by mixing 3-aminopropyltriepoxy silane as a silane coupling agent, lithium polysilicate as a metal silicate compound, isopropylditriethanolamino titanate as a titanium compound (a titanate compound) and a polyurethane resin-melamine-based resin composition (polyurethane resin and butoxymethyl melamine (a melamine-based curing agent) are mixed in a weight ratio of 10:2, and the polyurethane resin has a weight average molecule weight of 20,000) in the corresponding contents listed in the following Table 1, based on 100 parts by weight of the steel sheet surface treatment composition, and stirring the resulting mixture. The balance in the steel sheet surface treatment composition was pure water, and a viscosity of the steel sheet surface treatment composition was adjusted to 8 cps.

Both surfaces of the electrogalvanized steel sheet were roll-coated respectively with the thus prepared steel sheet surface treatment compositions of Comparative examples listed in the following Table 1 so that a dry coating thickness of each of the steel sheet surface treatment compositions can be adjusted, per one surface, to a thickness range as listed in following Table 1. Then, the electrogalvanized steel was dried at PMT-160°C (degrees centigrade) to form steel sheet surface treatment coating films (lower coating films) on the both surfaces of the electrogalvanized steel sheet. Then, the steel sheet comprising the steel sheet surface treatment coating films was measured for surface conductivity and corrosion resistance. The results are listed in the following Table 1. The surface conductivity and corrosion resistance were measured in the same manner as described in the items for the evaluation of physical properties as described later.

Meanwhile, each of the front surfaces (a first surface) of the steel sheet surface treatment coating film of the steel sheet comprising the steel sheet surface treatment coating film, as listed in the following Table 1, was roll-coated with the resin compositions of Comparative examples 2-20 as listed in the following Table 2, so that a dry coating thickness of the resin composition can be adjusted to 15 *µ*m (micrometers), and dried at PMT-220°C (degrees centigrade) to form a resin-coating film. Then, the resin-coating film was measured for adhesion. The results are listed in the following Table 1. The adhesion of the resin-coating film was measured in the same manner as described in the items for the evaluation of physical properties as described later.

**Table 1**

| Comparative examples | Component (parts by weight) | | | | Quality characteristics | | | |
|---|---|---|---|---|---|---|---|---|
| | Silane coupling agent | Metal silicate | Titanate compound | Polyurethane-melamine composition | Dry coating thickness (*µ*m) | Surface conductivity | Corrosion resistance | Adhesion |
| example 1-1 | 1 | 1 | 1 | 8 | 0.5 | ⊚ | ⊚ | ⊚ |
| example 1-2 | 1 | 1 | 2 | 12 | 1.2 | ⊚ | ⊚ | ⊚ |
| example 1-1a | 1 | 1 | 1 | 4 | 0.4 | ⊚ | Δ | Δ |
| example 1-3 | 1 | 1 | 2 | 8 | 0.8 | ⊚ | ⊚ | ⊚ |
| example 1-4 | 1 | 3 | 1 | 12 | 1.6 | ⊚ | ⊚ | ⊚ |
| example 1-2a | 1 | 1 | 2 | 20 | 2.2 | ○ | ⊚ | ○ |
| example 1-5 | 1 | 3 | 2 | 8 | 1.0 | ⊚ | ⊚ | ⊚ |
| example 1-6 | 1 | 3 | 2 | 12 | 1.8 | ⊚ | ⊚ | ⊚ |
| example 1-3a | 2 | 2 | 2 | 4 | 0.7 | ⊚ | ○ | ○ |
| example 1-7 | 3 | 1 | 1 | 12 | 1.5 | ⊚ | ⊚ | ⊚ |
| example 1-8 | 3 | 1 | 2 | 8 | 1.0 | ⊚ | ⊚ | ⊚ |
| example 1-4a | 3 | 1 | 2 | 20 | 2.6 | Δ | ⊚ | ○ |
| example 1-9 | 3 | 3 | 1 | 8 | 1.0 | ⊚ | ⊚ | ⊚ |
| example 1-10 | 3 | 3 | 1 | 12 | 1.8 | ⊚ | ⊚ | ⊚ |
| example 1-5a | 3 | 3 | 2 | 4 | 0.7 | ⊚ | Δ | Δ |
| example 1-11 | 3 | 3 | 2 | 12 | 2.0 | ⊚ | ⊚ | ⊚ |
| example 1-6a | 3 | 3 | 2 | 20 | 3.0 | Δ | ⊚ | Δ |
| example 1-7a | 3 | 3 | 2 | Acrylic-melamine resin 3 | 0.8 | ⊚ | ○ | Δ |

| | | | | | | | | |
|---|---|---|---|---|---|---|---|---|
| * Acrylic resin/melamine-based curing agent compositions of Comparative examples 1-17a polyacrylic resin (weight average molecule weight: 20,000) and butoxymethyl melamine (a melamine-based curing agent) were mixed in a weight ratio of 5:1. | | | | | | | | |

As listed in Table 1, it was revealed that the steel sheet surface treatment coating film (a lower coating film) showed excellent surface conductivity, corrosion resistance and adhesion when the steel sheet surface treatment coating film was formed with a dry coating thickness of 0.5 to 2 *µ*m (micrometers) of the steel sheet surface treatment composition comprising the polyurethane resin/melamine-based curing agent composition, the silane coupling agent, the metal silicate and the titanate compound within the content ranges according to one aspect described herein.

### (2) Resin composition

The resin composition was prepared by mixing a main resin/melamine curing agent composition, a carbon black pigment, a flatting agent, a titanium compound (a titanate compound) and a fingerprint-resistant additive in the content ranges as listed in the following Table 2, based on 100 parts by weight of the resin composition. As the other additives, 1 part by weight of polyethylene wax, 2 parts by weight of *p*-toluene sulfonic aicd (a curing catalyst), 0.5 parts by weight of a BYK-170TM pigment anticoagulant (BYK chemie), and 0.5 parts by weight of zinc phosphate (a phosphate adhesion promoter) were added to the resin composition, based on 100 parts by weight of the resin composition, and the resulting mixture was stirred at a rotary speed of 3000 rpm for 30 minutes in a high-speed stirrer with zirconia balls, thus to prepare a resin composition. Here, Printex™ (Degussa, Germany) having a mean particle diameter of approximately 10 to 30 nm (nanometers) was used as the carbon black pigment, and isopropylditriethanolamino titanate was used as the titanium compound. Synthetic silica (DC Chemical Co., Ltd) having a mean particle diameter of approximately 3 *µ*m (micrometers) was used as the flatting agent. A composition, which was prepared by mixing a polyester resin having a weight average molecular weight of 4,000 to 15,000 with a melamine-based curing agent in a weight ratio of 10:2, was used as the main resin/melamine curing agent composition. Trimethoxymethyl melamine and dimethyl polysiloxane were used as the melamine-based curing agent and the fingerprint-resistant additive, respectively.

Meanwhile, a thinner (cellosolve acetate) used as the solvent was mixed in the resin composition in such content that the resin composition can have such a viscosity that it takes 30 to 60 seconds to discharge the resin composition from a DIN cup (#4, DIN 53211).

The components and their contents of the resin composition as listed in the following Table 2 were represented by a part(s) by weight, based on 100 parts by weight of the resin composition. The balance except for the additives was a thinner solvent.

**[Table 2]**

| Comparative examples | Components (parts by weight) | | | | |
|---|---|---|---|---|---|
| | Resin composition | Carbon black Pigment | Flatting agent | Titanium compound | Finger print-resistance additive |
| example 2-12 | 25 | 2 | 2 | 2 | 0.5 |
| example 2-13 | 25 | 2 | 4 | 4 | 2 |
| example 2-8a | 25 | 4 | 2 | 2 | 2.5 |
| example 2-14 | 25 | 4 | 4 | 4 | 0.5 |
| example 2-15 | 25 | 2 | 2 | 2 | 2 |
| example 2-9a | 25 | 2 | 4 | 4 | 0.3 |
| example 2-16 | 25 | 4 | 2 | 2 | 0.5 |
| example 2-17 | 25 | 4 | 4 | 4 | 2 |
| example 2-10a | 35 | 2 | 2 | 2 | 0.3 |
| example 2-18 | 35 | 2 | 4 | 4 | 0.5 |
| example 2-19 | 35 | 4 | 2 | 2 | 2 |
| example 2-11a | 35 | 4 | 4 | 4 | 2.5 |
| example 2-20 | 35 | 2 | 2 | 2 | 0.5 |
| example 2-11 | 35 | 2 | 4 | 4 | 2 |
| example 2-12a | 35 | 4 | 2 | 2 | 2.5 |
| example 2-12 | 35 | 4 | 4 | 4 | 2 |
| example 2-13a | 30 | 5 | 3 | 2 | 2.5 |

### 3. Preparation of steel sheet test sample

Both the front and rear surfaces of the base steel sheet were roll-coated with each of the steel sheet surface treatment compositions of examples 1-7 or examples 1-7a, so that the dry coating thickness of a lower coating film (a steel sheet surface treatment composition) can be adjusted, per one surface, to the thickness range as listed in following Table 3, and then dried at PMT-160°C (degrees centigrade) to form lower coating films (steel sheet surface treatment coating films) on both surfaces of the base steel sheet. Then, each of the steel sheet surface treatment coating films was coated with each of the resin compositions as listed in the following Table 3, so that the dry coating thickness of the resin composition can be adjusted to the thickness range as listed in following Table 3, and dried at PMT-230°C(degrees centigrade) to form an upper coating film(s) (a resin coating film(s)) on the steel sheet surface treatment coating film(s) formed on the front surface or both surfaces of the base steel sheet as listed in Table 3.

### 4. Evaluation of physical properties of steel sheets

### (1) Surface electroconductivity

The surface electroconductivity of a steel sheet was evaluated by measuring the resistance of a steel sheet surface treatment coating film (a lower coating film) using a LORESTA GP meter (Mitsubishi Chemical Corporation). The results are listed in Table 1.

### [Evaluation criteria]

⊚: Resistivity ≤0.1mΩ, O: 0.1 mΩ<Resistivity<1mΩ, and Δ: Resistivity ≥1 mΩ(milliohm)

### (2) Bending workability

A resin-coated steel sheet comprising a lower coating film and an upper coating film was bent at an angle of 180° (degrees), and pressed in a vise until the resin-coated steel sheet was flattened (0, 1, 2T - bending test). The state of the resin coating film was evaluated by attaching a Scotch® transparent tape to the bent resin coating film and removing the transparent tape from the bent resin coating film.

### [Evaluation criteria]

⊚: No peel at 0, 1 and 2T bending tests, ○: Peeled only at 0T bending test, and Δ: Peeled at 0, 1 and 2T bending tests.

### (3) Coating adhesion

100 marks in the form of checkered pattern were drawn at a distance of 1 mm (millimeter) on a surface of a resin coating film of the steel sheet, and performed Ericksen processing by 7mm(millimeter). Then, when the resin coating film was peeled off by a Scotch® transparent tape, peeled marks on the coating film were counted to evaluate the coating adhesion to a steel sheet.

### [Evaluation criteria]

⊚: No peel, ○: 3 or less peeled marks, and Δ: Greater than 3 peeled marks

### (4) Solvent resistance

The solvent resistance of a steel sheet was determined by cutting a resin-coated steel sheet into test samples with size of 50 mm x 100 mm (millimeters), rubbing the test samples with a force of 1 Kgf with gauze dipped in methylethylketone, and counting the rubbing number until the coating film was peeled off.

### [Evaluation criteria]

⊚: Greater than 50 cycles, ○: 20 to 50 cycles, and Δ: Less than 20 cycles

### (5) Fingerprint resistance

The fingerprint resistance of a steel sheet was evaluated by soaking a surface of an upper coating film in an artificial fingerprint solution, keeping the upper coating film for 30 minutes, and measuring color difference in the upper coating film.

### [Evaluation criteria]

⊚: ΔE ≤0.5, ○: 0.5 < ΔE < 1.0, and Δ: ΔE≥1.0.

### (6) Heat release property

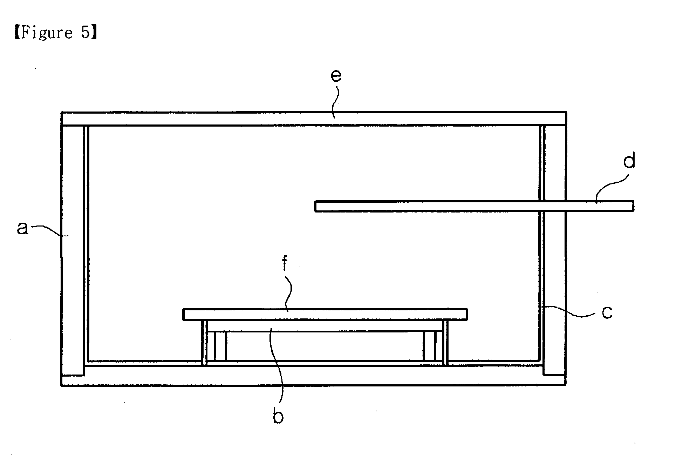

Equipment as shown in FIG. 5 was manufactured to evaluate the heat release property of a steel sheet. The equipment of FIG. 5 comprises an exterior covering formed of Styrofoam (a), an aluminum foil (c) lined on an inner part of the Styrofoam, and a heater (b) arranged in a central region thereof. A radiation-intercepting aluminum plate (f) was arranged on the heater (b). A thermometer (d) is installed between the heater (b) and an upper portion of the equipment so that it can be arranged above the central region of the heater (b), as shown in FIG. 5. A steel sheet test sample to be measured was put on an opened top surface (e) of the equipment and the change in temperature in a box was measured. The volume of the equipment was 200 mm x 200 mm x 200 mm (millimeters).

The resin-coated steel sheet prepared in each of the Comparative examples was cut into test samples with size of 200 mm(millimeters) x 200 mm (millimeters), one of the test samples was attached to the opened top surface (e) of the equipment, and the equipment was sealed. In this case, the test sample was attached to the opened top surface (e) of the equipment so that a resin-coated surface of the steel sheet can face an outer surface of the equipment. The heat-release temperature from the test sample was evaluated by determining difference (ΔT) in internal temperatures between a non-coated electrogalvanized steel sheet (a base steel sheet) and a resin-coated steel sheet.

### (7) Gloss

The gloss of a resin-coating film of the steel sheet prepared in each of the Comparative examples was measured at an incidence angle 60° (degrees) using a gloss meter (Model Sheen REF-260).

### (8) Corrosion resistance

The corrosion resistance of a steel sheet was evaluated by spraying a steel sheet test sample with 5 % by weight of NaCl at an injection pressure of 1 Kg/m² (kilogram/square meter) using a brine spray equipment (Japanese industrial standards (JIS) test method JIS E2731), and measuring the time required until 5 area%(area percent) of white rust occurred on the test sample.

### [Evaluation criteria]

⊚: Greater than 72 hr, ○: 48 to 72 hr, Δ: Less than 48 hr in the case of the steel sheet surface treatment coating film (a lower coating film)

⊚: Greater than 120 hr, ○: 96 to 120 hr, Δ: Less than 96 hr in the case of the resin-coating film (an upper coating film)

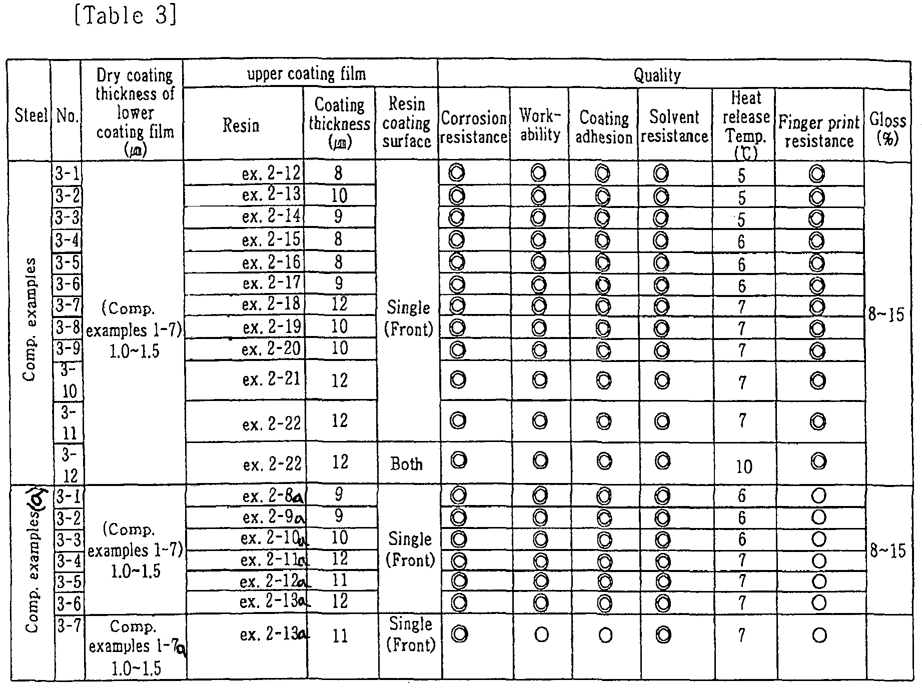

As listed in Table 3, it was revealed that the steel sheets of comparative examples 3-1 to 3-12, where the components and their contents, and the coating conditions of the lower coating film and the upper coating film are within the ranges according to one exemplary embodiment of the present invention, showed excellent physical properties such as corrosion resistance, workability, adhesion, solvent resistance, fingerprint resistance, heat release property and gloss.

### II. Electroconductive steel sheet

### 1. Base steel sheet

An electrogalvanized steel (EG) whose thickness is 0.5 mm (millimeters) and both surfaces are coated with zinc (Zn) in a coating content of 20 g/m ² (grams/square meter) per one surface was used as a steel sheet.

### 2. Steel sheet surface treatment composition

A steel sheet surface treatment composition was prepared by stirring the content of the components, as listed in the following Table 4, at a rotary speed of 1000 rpm for 30 minutes in a high-speed stirrer. The contents of the components in each of the steel sheet surface treatment compositions listed in the following Table 4 were based on 100 parts by weight of the steel sheet surface treatment composition, and the balance was pure water. Here, the prepared steel sheet surface treatment compositions had a viscosity of 8 cps.

**[Table 4]**

| Comparative Examples | Silane coupling agent (parts of weight) | Metal silicate (parts by weight) | Titanium compound (parts by weight) | Resin/melamine-based curing agent composition (parts by weight) |
|---|---|---|---|---|
| example 4-1 | 1 | 1 | 1 | (1)/8 |
| example 4-2 | 1 | 1 | 2 | (1)/12 |
| example 4-3 | 2 | 2 | 1 | (1)/12 |
| example 4-4 | 2 | 3 | 2 | (1)/8 |
| example 4-5 | 1 | 3 | 2 | (1)/12 |
| example 4-6 | 3 | 2 | 1 | (1)/12 |
| example 4-7 | 3 | 3 | 2 | (1)/8 |
| example 4-8 | 3 | 4 | 3 | - |
| example 4-9 | 2 | 4 | 2 | (1)/12 |
| example 4-10 | 2 | 2 | 2 | (2)/8 |
| example 4-11 | 3 | 3 | 1 | (2)/10 |

| | | | | |
|---|---|---|---|---|
| * Silane coupling agent: 3-aminopropyltriepoxy silane; Metal silicate: lithium polysilicate; Titanium compound: isopropylditriethanolamino titanate; and Resin/melamine-based curing agent composition: (1) Mixture of polyurethane resin (Mw: 5,000 to 7,000) and butoxymethyl melamine at a weight ratio of 10:2. (2) Mixture of polyethylene acrylate (Mw: 5,000 to 7,000) and butoxymethyl melamine at a weight ratio of 10:4. | | | | |

### 3. Electroconductive resin composition

A resin composition was prepared by stirring the content of the components, as listed in the following Table 5, at a rotary speed of 3000 rpm for 30 minutes in a high-speed stirrer with zirconia balls. The contents of the components in each of the resin composition listed in the following Table 5 were based on 100 parts by weight of the resin composition, and the balance was a thinner (cellosolve acetate). The prepared resin compositions had such a viscosity that it took 30 to 60 seconds to discharge the resin composition from a DIN cup (#4, DIN 53211).

**[Table 5]**

| Comparative Examples | Resin/melamine based curing agent composition (resin/ parts by weight) | Pigment (parts by weight) | Flatting agent (parts by weight) | Titanium compound (parts by weight) | Electro-conductive additive (parts by weight) | Other additives (parts by weight) |
|---|---|---|---|---|---|---|
| Ex. 5-1 | (1)/25 | 2 | 2 | 2 | (1)/4 | ① Polyethylene wax 1 |
| Ex. 5-2 | (2)/25 | 2 | 4 | 4 | (1)/8 | |
| Ex. 5-3 | (3)/25 | 4 | 4 | 4 | (1)/10 | ② Curing catalyst 2 |
| Ex. 5-4 | (4)/25 | 2 | 2 | 2 | (2)/4 | |
| Ex. 5-5 | (1)/25 | 4 | 2 | 2 | (2)/6 | ③ Pigment anticoagulant 0.5 |
| Ex. 5-6 | (2)/25 | 4 | 4 | 4 | (2)/4 | |
| Ex. 5-7 | (1)/35 | 2 | 4 | 4 | (1)/8 | ④ Phosphate-based additive 0.5 |
| Ex. 5-8 | (4)/35 | 4 | 2 | 2 | (3)/2 | |
| Ex. 5-9 | (1)/35 | 4 | 2 | 2 | (3)/10 | |
| Ex. 5-10 | (2)/35 | 2 | 4 | 4 | (4)/8 | |
| Ex. 5-11 | (3)/35 | 4 | 4 | 4 | (4)/4 | |
| Ex. 5-1a | (1)/25 | 4 | 2 | 2 | (1)/1 | |
| Ex. 5-2a | (2)/25 | 2 | 4 | 4 | (1)/12 | |
| Ex. 5-3a | (3)/35 | 2 | 2 | 2 | (2)/0.5 | |
| Ex. 5-4a | (4)/35 | 4 | 4 | 4 | (2)/12 | |
| Ex. 5-5a | (1)/35 | 4 | 2 | 2 | (3)/15 | |
| Ex. 5-6a | (2)/30 | 5 | 3 | 2 | 6 | |
| | | | | | (Aluminum powder with mean particle diameter of 5*µ*m, Planar shape, Eccentricity:0.7) | |

| | | | | | | |
|---|---|---|---|---|---|---|
| A. Main resin/melamine-based curing agent composition: (1) Mixture of polyester resin (Mw: 6,000 to 10,000) and trimethoxymethyl melamine curing agent at a weight ratio of 5:2. (2) Mixture of epoxy resin (Mw: 5,000 to 8,000) and butoxymethyl melamine curing agent at a weight ratio of 2:1. (3) Mixture of polyurethane resin (Mw: 5,000 to 9,000) and hexamethoxy methyl melamine curing agent at a weight ratio of 5:2. (4) Mixture of acrylic resin (Mw: 5,000 to 10,000) and melamine curing agent at a weight ratio of 2:1. B. Pigment: a carbon black pigment (Printex Degussa, Germany) having a mean particle diameter of approximately 15 to 2 5nm (nanometers). C. Mixture of a flatting agent, and silica and titania at a weight ratio of 9:1. D. Titanium compound: isopropylditriethanolamino titanate. E. Electroconductive additives: (1) Aluminum powder (Eccentricity: 0.5) having a mean particle diameter of 5*µ*m (micrometers) (2) Nickel powder (Eccentricity: 0.3) having a mean particle diameter of 5 *µ*m (micrometers) (3) Zinc powder (Eccentricity: 0) having a mean particle diameter of 5 *µ*m (micrometers) (4) Iron powder (Eccentricity: 0.2) having a mean particle diameter of 5 *µ*m (micrometers) F. Other additives: (1) Curing catalyst: *p*-toluene sulfonic aicd (2) Pigment anticoagulant: BYK-170™(trademark, BYK chemie) pigment anticoagulant (3) Phosphate-based additive: zinc phosphate | | | | | | |

### 4. Steel sheet surface treatment

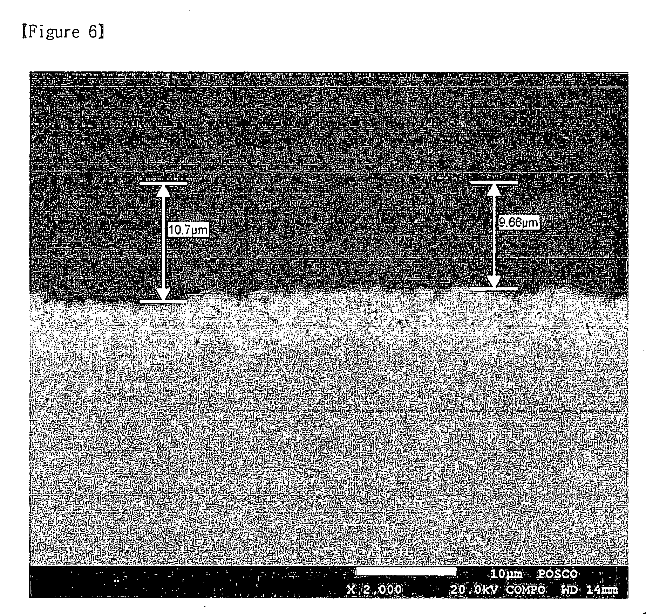

Both the first and second surfaces of the base steel sheet were roll-coated with each of the steel sheet surface treatment compositions of Table 4 as listed in the following Table 6, so that a dry coating thickness of the steel sheet surface treatment composition can be adjusted, per one surface, to the thickness range as listed in following Table 6, and then dried at PMT-160°C(degrees centigrade) to form steel sheet surface treatment coating films (lower coating films) on both surfaces of the steel sheet. In this case, the lower coating film had a dry coating thickness of 1.0 to 1.5 *µ*m (micrometers). Then, each of the steel sheet surface treatment coating films was coated with each of the resin compositions as listed in the following Table 5, so that the dry coating thickness of each of the resin compositions can be adjusted to the thickness range as listed in following Table 6, and dried at PMT-230°C(degrees centigrade) to form upper coating films (resin coating films) on the steel sheet surface treatment coating films. Then, the upper coating films thus prepared were measured for in-plane corrosion resistance, workability, coating adhesion, heat-release temperature, electroconductivity and gloss. The results are listed in the following Table 6. The physical properties were measured in the same manner as described in the items for the evaluation of physical properties as described later. Furthermore, a microphotograph taken of a side cross-section of the steel sheet comparing aluminum metal powder (Comparative example 6-1) is shown in FIG. 6.

**[Table 6]**

| | | Electroconductive resin-coating film | | | | | | | | |
|---|---|---|---|---|---|---|---|---|---|---|
| Comparative Examples No. | Steel sheet surface treatment coating film | Resin composition | Coating thickness (*µ*m) | Resin coating surface | In-plane corrosion resistance | Workability | Coating adhesion | Heat-release property (reduction of internal temp., °C) | Electroconductivity | Gloss (%) |
| Ex. 6-1 | Ex. 4-1 | Ex. 5-1 | 8 | Both | ⊚ | ⊚ | ⊚ | 9∼10 | ⊚ | 5∼30 |
| Ex. 6-2 | Ex. 4-2 | Ex. 5-2 | 10 | | ⊚ | ⊚ | ⊚ | | ⊚ | |
| Ex. 6-3 | Ex. 4-3 | Ex. 5-3 | 9 | | ⊚ | ○ | ○ | | ⊚ | |
| Ex. 6-4 | Ex. 4-4 | Ex. 5-4 | 8 | | ⊚ | ⊚ | ⊚ | | ⊚ | |
| Ex. 6-5 | Ex. 4-5 | Ex. 5-5 | 8 | | ⊚ | ⊚ | ⊚ | | ⊚ | |
| Ex. 6-6 | Ex. 4-6 | Ex. 5-6 | 9 | | ⊚ | ⊚ | ⊚ | | ⊚ | |
| Ex. 6-7 | Ex. 4-7 | Ex. 5-7 | 12 | | ⊚ | ⊚ | ⊚ | | ⊚ | |
| Ex. 6-8 | Ex. 4-8 | Ex. 5-8 | 10 | | ⊚ | ⊚ | ⊚ | | ○ | |
| Ex. 6-9 | Ex. 4-9 | Ex. 5-9 | 10 | | ⊚ | ⊚ | ⊚ | | ⊚ | |
| Ex. 6-10 | Ex. 4-10 | Ex. 5-10 | 12 | | ⊚ | ⊚ | ⊚ | | ⊚ | |
| Ex. 6-11 | Ex. 4-11 | Ex. 5-11 | 12 | | ⊚ | ⊚ | ⊚ | | ⊚ | |
| Ex. 6-12 | Ex. 4-9 | Ex. 5-11 | 12 | Single | ⊚ | ⊚ | ⊚ | 6 | ⊚ | |
| Ex. 6-1a | Ex. 4-1 | Ex. 5-1a | 9 | Both | ⊚ | ⊚ | ⊚ | 9∼10 | Δ | 5∼30 |
| Ex. 6-2a | Ex. 4-3 | Ex. 5-2a | 9 | | ⊚ | Δ | ○ | | ⊚ | |
| Ex. 6-3a | Ex. 4-5 | Ex. 5-3a | 10 | | ⊚ | ⊚ | ⊚ | | ○ | |
| Ex. 6-4a | Ex. 4-7 | Ex. 5-4a | 12 | | ○ | Δ | ○ | | ⊚ | |
| Ex. 6-5a | Ex. 4-9 | Ex. 5-5a | 11 | | ○ | Δ | Δ | | ⊚ | |
| Ex. 6-6a | Ex. 4-11 | Ex. 5-6a | 12 | | ⊚ | ⊚ | ⊚ | | ○ | |

As seen from the evaluation of the physical properties of the steel sheets as listed in Table 6, it was revealed that the resin-coated steel sheets, each comprising a resin coating film formed within the content range satisfying all the requirements according to one aspect described herein, satisfied all the physical properties, such as corrosion resistance, workability, adhesion, heat release property, electroconductivity and gloss, which have been required in the steel sheet.

### 5. Evaluation of physical properties of steel sheets

### (1) In-plane corrosion resistance

The in-plane corrosion resistance of a steel sheet was evaluated by spraying a resin-coated steel sheet test sample with 5 % by weight of NaCl at an injection pressure of 1 Kg/m² (kilogram/square meter) using a brine spray equipment (Japanese industrial standards (JIS) test method JIS E2731), and measuring the time required until 5 area% (area percent) of white rust occurred on the test sample.

### [Evaluation criteria]

⊚: Greater than 120 hr, ○: 96 to 120 hr, Δ: Less than 96 hr.

### (2) Workability

A resin-coated steel sheet was bent at an angle of 180° (degrees), and pressed in a vise until the resin-coated steel sheet was flattened (0T - bending test). The bent resin coating film was observed with a magnifier of 20 magnifications to check whether cracks occur on the resin coating film. Also, the state of the resin coating film was evaluated by attaching a Scotch® transparent tape to the bent resin coating film and removing the transparent tape from the bent resin coating film.

### [Evaluation criteria]

⊚: No crack and peel on a resin coating film at a 0T bending test, ○ : Some cracks but no peel on a resin coating film in a 0T bending test, and Δ: Cracks and peels on a resin coating film at a 0T bending test.

### (3) Coating adhesion

100 marks in the form of checkered pattern were drawn at a distance of 1 mm (millimeter) on a surface of an electroconductive resin-coating film of the steel sheet, and performed Ericksen processing by 7mm(millimeter). Then, when the resin coating film was peeled off by a Scotch® transparent tape, peeled marks on the coating film were counted to evaluate the coating adhesion to a steel sheet.

### [Evaluation criteria]

⊚: No peel, ○: 3 or less peeled marks, and Δ: 3 or more peeled marks

### (4) Heat absorption and release property

Equipment as shown in FIG. 5 was manufactured to evaluate the heat absorption and release property of a steel sheet. The equipment of FIG. 5 comprises an exterior covering formed of Styrofoam (a), an aluminum foil (c) lined on an inner part of the Styrofoam, and a heater (b) arranged in a central region thereof. A radiation-intercepting aluminum plate (f) was arranged on the heater (b). A thermometer (d) is installed between the heater (b) and an upper portion of the equipment so that it can be arranged above the central region of the heater (b), as shown in FIG. 5. A steel sheet test sample to be measured was put on an opened top surface (e) the equipment and a change in temperature in a box was measured. A volume of the equipment was 200 mm x 200 mm x 200 mm (millimeters).

The steel sheet prepared in each of the Comparative examples was cut into test samples with size of 200 mm x 200 mm (millimeters), one of the test samples was attached to the opened top surface (e) of the equipment, and the equipment was sealed. When a resin-coating film was formed only one surface of the test sample, the test sample was attached to the opened top surface (e) of the equipment so that a resin-coated surface of the steel sheet can face an outer surface of the equipment. The heat-release temperature from the test sample was evaluated by determining difference (ΔT) in internal temperatures between an uncoated base steel sheet and a resin-coated steel sheet.

### (5) Electroconductivity

The electroconductivity of a steel sheet was evaluated by measuring a resistance using a LORESTA GP meter (Mitsubishi Chemical Corporation).

### [Evaluation criteria]

⊚: Resistivity ≤ 10 mΩ, ○: 10 mΩ < Resistivity < 1000 mΩ, and Δ: Resistivity ≥1000 mΩ

### (6) Gloss

The gloss of a resin-coating film of the steel sheet was measured at an incidence angle 60° (degrees) using a gloss meter (Model Sheen REF-260).

### III. Multiple-workable steel sheet

### 1. Evaluation of physical properties of steel sheets according to the changes in compositions and contents of a steel sheet surface treatment composition (a lower coating composition)

Steel sheet surface treatment compositions of Inventive steels and Comparative steels as listed in the following Table 7 were prepared by adding, to pure water, a mixture of a urethane resin(Mn: 18,000) and a melamine-based curing agent (where the urethane resin and the melamine-based curing agent were mixed in a weight ratio of 10:3), a silicate compound, a silane compound, a titanium compound and phosphate ester in the corresponding content ranges as listed in the following Table 7. Meanwhile, the amount of the pure water was adjusted to such content that a solid content of each of the steel sheet surface treatment compositions would be in a range of 10 to 15 % by weight. Also, the viscosity of each of the steel sheet surface treatment compositions was adjusted to a range of approximately 4 to 10 cps.

Butoxymethyl melamine was used as the melamine-based curing agent, lithium polysilicate was used as the silicate compound, 3-aminopropyltriepoxy silane was used as the silane compound, and titanium carbonate was used as the titanium compound. In the use of the low molecular weight polyurethane, low molecular weight polyurethane having a number average molecular weight of 900 was used.

Then, both surfaces of an electrogalvanized steel sheet (EG) were roll-coated with the prepared steel sheet surface treatment composition of each of Inventive steels and Comparative steels listed in the following Table 7, so that both surfaces of the electrogalvanized steel sheet, which were coated with 20 g/m² (grams/square meter) of zinc (Zn) per one surface, could be coated with a dry coating thickness of 1 *µ*m (micrometer). Then, the electrogalvanized steel sheet (EG) was baked/dried at PMT-165°C(degrees centigrade), and cooled to form a steel sheet surface treatment coating film (a lower coating film).

Subsequently, the steel sheets comprising the steel sheet surface treatment coating film were measured for corrosion resistance. The results are listed in the following Table 7. The corrosion resistance was measured in the same manner as described later in the items for the evaluation of physical properties.

Meanwhile, the steel sheet surface treatment coating film of one surface of each of the steel sheets having a steel sheet surface treatment coating film formed therein as listed in Table 7, was roll-coated with the resin-coating composition so that the resin-coating composition could have a dry coating thickness of 10 *µ*m (micrometers), baked/dried at PMT-210°C (degrees centigrade), and then cooled to form a resin-coating film(an upper coating film). Then, the resin-coating film was evaluated for adhesion. The results are listed in the following Table 7. The adhesion was measured in the same manner as described later in the items for the evaluation of physical properties.

The resin composition (an upper coating composition) was prepared by mixing 100 parts by weight of a polyester resin with a number average molecule weight of 27,000, a 15 parts by weight of a melamine-based curing agent, 10 parts by weight of a flatting agent and 10 parts by weight of a pigment with cyclohexanone. The cyclohexanone solvent was used so that the total solid content of the resin-coating composition would be 35 to 45 % by weight. Also, the cyclohexanone solvent was mixed in the resin composition in such content that the resin composition would have a viscosity that it takes 30 to 60 seconds to discharge the resin composition from a DIN cup (DIN 53211). Hereinafter, the resin-coating composition having the components and their contents is referred to as a 'basic resin composition. Trimethoxymethyl melamine was used as the melamine-based curing agent, Printex™ (Degussa, Germany) with a mean particle diameter of approximately 15 to 25 nm (nanometers) was used as the pigment, and synthetic silica (DC Chemical Co., Ltd) having a mean particle diameter of approximately 3 *µ*m (micrometers) was used as the flatting agent.

**[Table 7]**

| | Compositions(parts by weight) | | | | | | Quality evaluation | |
|---|---|---|---|---|---|---|---|---|
| | Silicate compound | Low molecular weight urethane | Silane compound | Titanium compound | Urethane resin/ melamine-based curing agent composition | Phosphate ester | Corrosion resistance | Adhesion |
| Comp. steel 7-1 | 1 | 0 | 3 | 3 | 35 | 2 | Δ | Δ |
| Comp. steel 7-1 | 3 | | | | | | ○ | ○ |
| Comp. steel 7-2 | 10 | | | | | | ○ | ○ |
| Inventive steel 7-3 | 20 | 20 | | | | | ○ | ○ |
| Comp. steel 7-2 | 30 | 0 | | | | | ○ | Δ |
| Comp. steel 7-3 | 10 | | 0.3 | | | | Δ | ○ |
| Comp. steel 7-4 | | | 0.5 | | | | ○ | ○ |
| Comp. steel 7-5 | | | 3 | | | | ○ | ○ |
| Comp. steel 7-6 | | | 10 | | | | ○ | ○ |
| Comp. steel 7-4 | | | 15 | | | | ○ | ○ |
| Comp. steel 7-5 | | | 3 | 0.1 | | | Δ | ○ |
| Inventive steel 7-7 | | 40 | | 0.2 | | | ○ | ○ |
| Comp. steel 7-8 | | 0 | | 3 | | | ○ | ○ |
| Comp. steel 7-8 | | | | 5 | | | ○ | ○ |
| Comp. steel 7-10 | | | | 8 | | | ○ | ○ |
| Comp. steel 7-6 | | | | 10 | | | ○ | ○ |
| Comp. steel 7-7 | | | | 3 | 20 | | Δ | Δ |
| Inventive steel 7-11 | | 60 | | | 25 | | ○ | ○ |
| Comp. steel 7-12 | | 0 | | | 30 | | ○ | ○ |
| Comp. steel 7-13 | | | | | 40 | | ○ | ○ |
| Comp. steel 7-8 | | | | | 45 | | Δ | ○ |
| Comp. steel 7-9 | | | | | 33 | 0.5 | ○ | Δ |
| Comp. steel 7-14 | | | | | | 1,0 | ○ | ○ |
| Comp. steel 7-15 | | | | | | 2 | ○ | ○ |
| Comp. steel 7-16 | | | | | | 5 | ○ | ○ |
| Comp. steel 7-10 | | | | | | 8 | ○ | ○ |

As listed in Table 7, it was revealed that the resin-coated steel sheets each comprising the steel sheet surface treatment coating film (a lower coating film) have excellent corrosion resistance and adhesion, wherein the steel sheet surface treatment coating film is formed of the steel sheet surface treatment composition, which comprises the polyurethane resin/melamine-based curing agent composition, the silicate compound, the silane compound, the titanium compound and the phosphate ester within the content ranges according to one exemplary embodiment of the present invention, and the steel sheet surface treatment composition further comprising the low molecular weight urethane resin.

Meanwhile, it was seen that Comparative steel 7-4 including a large amount of the added silane, Comparative steel 7-6 including a large amount of the added titanium compound, and Comparative steel 7-10 including a large amount of the added phosphate ester show their excellent physical properties, but the use of the excessive components is also uneconomic.

### 2. Evaluation of physical properties of steel sheets according to the conditions used to form a steel sheet surface treatment coating film (a lower coating film).

A steel sheet surface treatment composition (hereinafter, a steel sheet surface treatment composition comprising these components and contents is referred to as a 'basic steel sheet surface treatment composition.') was prepared by mixing 35 parts by weight of a resin mixture of a urethane resin with a number average molecule weight of 17,000 and a melamine resin (weight ratio: 10:3), 10 parts by weight of a silicate compound, 3 parts by weight of a silane compound, 3 parts by weight of a titanium compound, 2 parts by weight of phosphate ester, and the balance of pure water. The content of the pure water was adjusted so that the solid content of the steel sheet surface treatment composition would be in a range of approximately 12 to 15 % by weight. The viscosity of the steel sheet surface treatment composition was adjusted to approximately 4 to 10 cps.

Here, butoxymethyl melamine was used as the melamine-based curing agent, sodium polysilicate was used as the silicate compound, 3-aminopropyltriepoxy silane was used as the silane compound, and titanium carbonate was used as the titanium compound.

Then, both surfaces of an electrogalvanized steel sheet (EG) were roll-coated with the basic steel sheet surface treatment composition so that both surfaces of the electrogalvanized steel sheet, which are coated with 20 g/m² (grams/square meter) of zinc (Zn) per one surface, can be coated, respectively, in the coating content ranges as listed in the following Table 8. Then, the electrogalvanized steel sheet (EG) was baked/dried at the baking temperature (PMT) as listed in the following Table 8, and cooled to form a lower coating film. Then, the Comparative steels were measured for corrosion resistance. The results are listed in the following Table 8. The corrosion resistance was measured in the same manner as described later in the items for the evaluation of physical properties.

Meanwhile, the steel sheet surface treatment coating film of the front surface of each of the steel sheets having a steel sheet surface treatment coating film therein as listed in Table 8, was roll-coated with the basic resin composition prepared in the step III-1 so that the basic resin composition can have a dry coating thickness of 10 *µ*m (micrometers), and baked/dried at PMT-210°C (degrees centigrade) to form a resin-coating film (an upper coating film). Then, the Comparative steels, each of which comprised the resin-coating film formed therein, were evaluated for adhesion. The results are listed in the following Table 8. The adhesion was measured in the same manner as described later in the items for the evaluation of physical properties.

**[Table 8]**

| Physical properties of steel sheets according to the conditions used to form a lower coating film | | | | | |
|---|---|---|---|---|---|
| Comparative Steels | Manufacturing coditions | | | Quality evaluation | |
| | Baking temp. (PMT, °C) | Coating content (mg/m²) | Dry coating thickness(*µ*m) | Corrosion resistance | Adhesion |
| steel 8-1a | 140 | 1,000 | 1.0 | X | X |
| steel 8-1 | 150 | | | ○ | ○ |
| steel 8-2 | 165 | | | ○ | ○ |
| steel 8-3 | 180 | | | ○ | ○ |
| steel 8-2a | 200 | | | ○ | Δ |
| steel 8-3a | 165 | 400 | 0.4 | X | X |
| steel 8-4a | | 500 | 0.5 | Δ | ○ |
| steel 8-4 | | 800 | 0.8 | ○ | ○ |
| steel 8-5 | | 1,500 | 1.5 | ○ | ○ |
| steel 8-5a | | 3,200 | 3.2 | ○ | ○ |

As listed in Table 8, it was revealed that each of the resin-coated steel sheets comprising the steel sheet surface treatment coating film, which was formed under the conditions (i.e., baking temperature and coating content (dry coating thickness)) which are within the ranges according to one exemplary embodiment of the present invention, shows excellent corrosion resistance and adhesion.

### 3. Evaluation of physical properties of steel sheets according to the changes in components and their contents of a resin composition (an upper coating composition)

Both surfaces of an electrogalvanized steel sheet (EG) were roll-coated with the basic steel sheet surface treatment composition prepared in the step III-2 so that both surfaces of the electrogalvanized steel sheet, which were coated with 20 g/m² (grams/square meter) of zinc (Zn) per one surface, would be coated at a dry coating thickness of 1 *µ*m (micrometers). Then, the electrogalvanized steel sheet (EG) was baked/dried at PMT 165°C (degrees centigrade), and then cooled to form a steel sheet surface treatment coating film (a lover coating film).

Subsequently, the steel sheet surface treatment coating film of the front surface (a first surface) of each of the steel sheets having the steel sheet surface treatment coating film formed therein, was roll-coated with each of the resin compositions of Comparative steels, each of which comprised the contents of the components as listed in the following Table 9, so that the dry coating thickness of each of the resin compositions would be adjusted to 10 *µ*m (micrometers), Then, the steel sheet surface treatment coating film was baked/dried at PMT-210°C(degrees centigrade), and cooled to form a resin-coating film (an upper coating film). Each of the resin-coating compositions as listed in the following Table 9 was prepared by adding the contents of the components listed in the following Table 9 to cyclohexanone. The cyclohexanone solvent was used so that the total solid content of each of the resin-coating compositions can be in a content of 35 to 45 % by weight. Here, the cyclohexanone solvent was mixed in the resin composition in such content that the resin composition can have such a viscosity that it takes 30 to 60 seconds to discharge the resin composition from a DIN cup (DIN 53211). Also in the case of the resin composition, trimethoxymethyl melamine was used as the melamine-based curing agent, and silica with a particle diameter of 3 *µ*m (micrometers) was used as the flatting agent, Printex™ (Degussa, Germany) with a particle diameter of approximately 15 to 25 nm (nanometers) was used as the pigment. Furthermore, when the titanium compound was further added to the resin composition, titanium carbonate was used as the titanium compound.

Then, the Comparative steels, each of which comprised a resin-coating film, were measured for solvent resistance, coating crack resistance and corrosion resistance. The results are listed in the following Table 9. The solvent resistance, coating crack resistance and corrosion resistance were measured in the same manner as described in the items for the evaluation of physical properties as described later.

**[Table 9]**

| Evaluation of physical properties of steel sheets according to the changes in components and their contents of an upper coating film | | | | | | | | | |
|---|---|---|---|---|---|---|---|---|---|
| Steels | Compositions(parts by weight) | | | | | | Quality evaluation | | |
| Comparative steels | PE resin | | Melamine resin | Flatting agent | Pigment | Titanium compound | Solvent resistance | Coating crack resistance | Corrosion resistance |
| steel 9-1a | Number average molecule weight: 25.000:28,000= Weight ratio:1:1 | | 3 | 10 | 10 | 0 | X | ○ | X |
| steel 9-1 | | | 8 | | | | ○ | ○ | ○ |
| steel 9-2 | | | 15 | | | | ○ | ○ | ○ |
| steel 9-3 | | | 20 | | | | ○ | ○ | ○ |
| steel 9-2a | | | 30 | | | | ○ | X | ○ |
| steel 9-3a | | | 15 | 2 | | | ○ | Δ | X |
| steel 9-4 | | | | 5 | | | ○ | ○ | ○ |
| steel 9-5 | | | | 10 | | | ○ | ○ | ○ |
| steel 9-6 | | | | 15 | | | ○ | ○ | ○ |
| steel 9-4a | | | | 20 | | | ○ | X | ○ |
| steel 9-5a | 100 | | | 10 | 3 | | Deficient shielding force | | |
| steel 9-7 | | | | | 5 | | ○ | ○ | ○ |
| steel 9-8 | | | | | 10 | | ○ | ○ | ○ |
| steel 9-9 | | | | | 15 | | ○ | ○ | ○ |
| steel 9-6a | | | | | 20 | | Excessive content | | |
| steel 9-10* | | | | | 10 | 0.3 | ○ | ○ | ○ |
| steel 9-11 | | | | | | 0.5 | ○ | ○ | ○ |
| steel 9-12 | | | | | | 0.8 | ○ | ○ | ○ |
| steel 9-13 | | | | | | 1.0 | ○ | ○ | ○ |
| steel 9-7a | | | | | | 2.0 | ○ | Δ | ○ |
| steel 9-8a | Weight ratio of 25,000: 28,000 100 | 1:9 | 15 | 10 | 10 | ○ | ○ | Δ | ○ |
| steel 9-14 | | 3:7 | | | | | ○ | ○ | ○ |
| steel 9-15 | | 5:5 | | | | | ○ | ○ | ○ |
| steel 9-16 | | 7:3 | | | | | ○ | ○ | ○ |
| steel 9-9a | | 9:1 | | | | | ○ | Δ | ○ |

| | | | | | | | | | |
|---|---|---|---|---|---|---|---|---|---|
| (* The resin-coating composition was applied to both surfaces of a steel sheet surface treatment coating film in the case of steels 9-10) | | | | | | | | | |

As listed in Table 9, it was revealed that the resin-coated steel sheets each comprising the resin-coating film (an upper coating film) have excellent solvent resistance, coating crack resistance and corrosion resistance, wherein the resin-coating film is formed of the resin composition, which comprises the polyester resin, the melamine-based curing agent, the flatting agent and the pigment within the content ranges according to one exemplary embodiment of the present invention, and the resin composition further comprising the titanium compound.

### 4. Evaluation of physical properties of steel sheets according to the conditions used to form a resin-coating film (an upper coating film)

Both surfaces of an electrogalvanized steel sheet (EG) were roll-coated with the basic steel sheet surface treatment composition prepared in the step III-2 so that both surfaces of the electrogalvanized steel sheet, which were coated with 20 g/m² (grams/square meter) of zinc (Zn) per one surface, could be coated at a dry coating thickness of 1 *µ*m (micrometer). Then, the electrogalvanized steel sheet (EG) was baked/dried at PMT-165°C (degrees centigrade), and cooled to form a steel sheet surface treatment coating film (a lower coating film).

Then, the steel sheet surface treatment coating film of the front surface of each of the steel sheets having the steel sheet surface treatment coating film formed therein was roll-coated with the basic resin composition prepared in the step III-1 so that steel sheet surface treatment coating film could have a dry coating thickness as listed in the following Table 10. Then, the electrogalvanized steel sheet (EG) was baked/dried at the baking temperature (PMT) as listed in the following Table 10, and cooled to form a resin-coating film. Then, each of the Comparative steels as listed in the following Table 10 was measured for solvent resistance, coating crack resistance and corrosion resistance. The results are listed in the following Table 10. The solvent resistance, coating crack resistance and corrosion resistance were measured in the same manner as described later in the items for the evaluation of physical properties.

**[Table 10]**

| Evaluation of physical properties of steel sheets according to the conditions used to form an upper coating film | | | | | |
|---|---|---|---|---|---|
| Comparative Steel | Manufacturing conditions | | Quality evaluation | | |
| | Baking temp. (PMT, °C) | Coating thickness (*µ*m) | Solvent resistance | Coating crack resistance | Corrosion resistance |
| steel 10-1a | 170 | 10 | X | ○ | X |
| steel 10-1 | 180 | | Δ | ○ | ○ |
| steel 10-2 | 210 | | ○ | ○ | ○ |
| steel 10-3 | 240 | | ○ | Δ | ○ |
| steel 10-2a | 250 | | ○ | X | ○ |
| steel 10-3a | 210 | 5 | X | X | X |
| steel 10-4 | | 8 | ○ | ○ | ○ |
| steel 10-5 | | 10 | ○ | ○ | ○ |
| steel 10-6 | | 15 | ○ | ○ | ○ |
| steel 10-4a | | 45 | ○ | ○ | ○ |

As listed in Table 10, it was revealed that each of the resin-coated steel sheets comprising the resin-coating film, which was formed under the conditions (i.e., baking temperature and coating content (dry coating thickness)) which are within the ranges according to one exemplary embodiment of the present invention, showed excellent solvent resistance, coating crack resistance and corrosion resistance. The Comparative steel 10-4a having a dry coating thickness of greater than 40 *µ*m (micrometers) showed the excellent physical properties, but the increased dry coating thickness leads to increased manufacturing cost, which is undesirable in terms of the productivity.

### 5. Evaluation of physical properties of steel sheets

### (1) Crack resistance at bending portion (coating crack resistance)

A resin-coated steel sheet was elongated by 25% (percent), bent at angle of 180° (degrees), and then pressed in a vise until the resin-coated steel sheet was flattened (0T - bending test). The state of the coating film was evaluated from the presence of the cracks on a surface of the resin coating film by attaching a Scotch transparent tape to the bent coating film and removing the transparent tape from the bent coating film.

### [Evaluation criteria]

○ : No crack, Δ: Fine cracks, and X: Cracks.

### (2) Solvent resistance

The solvent resistance of a steel sheet was determined by cutting a resin-coated steel sheet into test samples with size of 50 mm (millimeters) x 100 mm (millimeters), rubbing the resin coating film with a force of 1 Kgf with gauze dipped in methylethylketone (MEK), and counting the rubbing number until the resin coating film was peeled off.

### [Evaluation criteria]

○: Greater than 50 cycles, Δ: 20 to 50 cycles, and X: Less than 20 cycles

### (3) Corrosion resistance

The corrosion resistance of a steel sheet was evaluated by spraying a steel sheet test sample with 5% by weight (weight percent) brine at a temperature of 35°C (degrees centigrade) and an injection pressure of 1 Kg/m² (kilogram/square meter) using a brine spray equipment (Japanese industrial standards (JIS) test method JIS E2731), and measuring the area% (area percent) of rusts formed on the test sample sprayed with the 5% by weight brine. The lower coating film which is a steel sheet surface treatment coating film was evaluated by measuring the area% (area percent) of rusts formed on the test sample for 72 hours after the brine spraying, and the upper coating film which is a resin-coating film was evaluated by measuring the area (AREA PERCENT (area percent)) of rusts formed on the test sample for 120 hours after the brine spraying.

### [Evaluation criteria]

○ : 0 area% (area percent) of corrosion area, Δ: 5 to 10 area% (area percent) of corrosion area, and X: Greater than 10 area% (area percent) of corrosion area.

### IV. Steel sheet comprising differentiated lower coating films

### 1. Steel sheet

An electrogalvanized steel (EG), whose thickness was 0.5 mm (millimeters) and both surfaces were coated with zinc (Zn) in a coating content of 20 g/m 2 (grams/square meter) per one surface, was used as a steel sheet.

### 2. Steel sheet surface treatment composition

A steel sheet surface treatment composition, which would be used to coat first and second surface of a base steel sheet, was prepared by stirring the contents of the components, as listed in the following Table 11, at a rotary speed of 1000 rpm for 30 minutes in a high-speed stirrer. The contents of the components in each of the steel sheet surface treatment compositions listed in the following Table 11 were based on 100 parts by weight of the steel sheet surface treatment composition, and the balance was pure water.

**[Table 11]**

| Comp Ex. | Silane coupling agent (part by weight) | Metal silicate (part by weight) | Titanium compound (part by weight) | Resin/melamine-based curing agent composition (part by weight) | Solid content (wt%) | Viscosity (cps) | Applied surface of base steel sheet |
|---|---|---|---|---|---|---|---|
| 1 | 2 | 2 | 1 | (1)/1 | 6 | 4-8 | First surface |
| 2 | 2 | 2 | 1 | (1)/2 | 7 | | First surface |
| 3 | 2 | 2 | 2 | (1)/1 | 7 | | First surface |
| 4 | 2 | 2 | 2 | (1)/2 | 8 | | First surface |
| 5 | 2 | 4 | 1 | (1)/1 | 8 | | First surface |
| 6 | 2 | 4 | 1 | (1)/2 | 9 | | First surface |
| 7 | 2 | 4 | 2 | (1)/1 | 9 | | First surface |
| 8 | 2 | 4 | 2 | (1)/2 | 10 | | First surface |
| 9 | 4 | 2 | 1 | (1)/1 | 8 | | First surface |
| 10 | 4 | 2 | 1 | (1)/2 | 9 | | First surface |
| 11 | 4 | 2 | 2 | (1)/1 | 9 | | First surface |
| 12 | 4 | 2 | 2 | (1)/2 | 10 | | First surface |
| 13 | 4 | 4 | 1 | (1)/1 | 10 | | First surface |
| 14 | 4 | 4 | 1 | (1)/2 | 11 | | First surface |
| 15 | 4 | 4 | 2 | (1)/1 | 11 | | First surface |
| 16 | 4 | 4 | 2 | (1)/2 | 12 | | First surface |
| 17 | 2 | 2 | 1 | (1)/4 | 9 | 8-10 | Second surface |
| 18 | 2 | 2 | 1 | (1)/8 | 13 | | Second surface |
| 19 | 2 | 2 | 2 | (1)/4 | 10 | | Second surface |
| 20 | 2 | 2 | 2 | (1)/8 | 14 | | Second surface |
| 21 | 2 | 4 | 1 | (1)/4 | 11 | | Second surface |
| 22 | 2 | 4 | 1 | (1)/8 | 15 | | Second surface |
| 23 | 2 | 4 | 2 | (1)/4 | 12 | | Second surface |
| 24 | 2 | 4 | 2 | (1)/8 | 16 | | Second surface |
| 25 | 4 | 2 | 1 | (1)/4 | 11 | | Second surface |
| 26 | 4 | 2 | 1 | (1)/8 | 15 | | Second surface |
| 27 | 4 | 2 | 2 | (1)/4 | 12 | | Second surface |
| 28 | 4 | 2 | 2 | (1)/8 | 16 | | Second surface |
| 29 | 4 | 4 | 1 | (1)/4 | 13 | | Second surface |
| 30 | 4 | 4 | 1 | (1)/8 | 17 | | Second surface |
| 31 | 4 | 4 | 2 | (1)/4 | 14 | | Second surface |
| 32 | 4 | 4 | 2 | (1)/8 | 18 | | Second surface |
| 33 | 2 | 2 | 1 | (2)/1 | 6 | 4-8 | First surface |
| 34 | 2 | 4 | 2 | (2)/2 | 10 | | First surface |
| 35 | 4 | 2 | 1 | (2)/6 | 13 | 8-10 | Second surface |
| 36 | 4 | 4 | 2 | (2)/8 | 18 | | Second surface |

| | | | | | | | |
|---|---|---|---|---|---|---|---|
| *Silane coupling agent: 3-aminopropyltriepoxy silane; Metal silicate: lithium polysilicate; Titanium compound: isopropylditriethanolamino titanate; and Resin/melamine-based curing agent composition: (1) Mixture of polyethylene acrylate (Mw: 5,000 to 7,000) and butoxymethyl melamine at a weight ratio of 10:4. (2) Mixture of polyurethane (Mw: 5,000 to 7,000) and butoxymethyl melamine at a weight ratio of 10:2. | | | | | | | |

### 3. Resin composition

A resin composition was prepared by stirring the content of the components, as listed in the following Table 12, at a rotary speed of 3000 rpm for 30 minutes in a high-speed stirrer with zirconia balls. The contents of the components in each of the resin compositions listed in the following Table 12 were based on 100 parts by weight of the resin composition, and the balance was a thinner (cellosolve acetate) solvent. Here, each of the resin compositions had such a viscosity that it took 30 to 80 seconds to discharge the resin composition from a Ford cup (Serial. No. #4, DIN 53211).

**[Table 12]**

| Comparative Examples | Resin/melamine-based curing agent composition (party by weight) | Pigment (parts by weight | Flatting agent (parts by weight) | Titanium compound (parts by weight) | Other additive (parts by weight) |
|---|---|---|---|---|---|
| Example 37 | (2)/20 | 4 | 4 | 2 | ① Polyethylene wax 1, |
| Example 38 | (2)/20 | 4 | 4 | 4 | |
| Example 39 | (2)/20 | 4 | 8 | 2 | ② Curing catalyst 2 |
| Example 40 | (2)/20 | 4 | 8 | 4 | |
| Example 41 | (1)/20 | 8 | 4 | 2 | ③ Pigment anticoagulant 0.5 |
| Example 42 | (1)/20 | 8 | 4 | 4 | |
| Example 43 | (1)/20 | 8 | 8 | 2 | ④ Phosphate-based additive 0.5 |
| Example 44 | (1)/20 | 8 | 8 | 4 | |
| Example 45 | (3)/30 | 4 | 4 | 2 | |
| Example 46 | (3)/30 | 4 | 4 | 4 | |
| Example 47 | (3)/30 | 4 | 8 | 2 | |
| Example 48 | (4)/30 | 4 | 8 | 4 | |
| Example 49 | (4)/30 | 8 | 4 | 2 | |
| Example 50 | (4)/30 | 8 | 4 | 4 | |
| Example 51 | (1)/30 | 8 | 8 | 2 | |
| Example 52 | (1)/30 | 8 | 8 | 4 | |

| | | | | | |
|---|---|---|---|---|---|
| A. Main resin/melamine-based curing agent composition: (1) Mixture of polyester resin (Mw: 6,000 to 10,000) and trimethoxymethyl melamine curing agent at a weight ratio of 5:2. (2) Mixture of epoxy resin (Mw: 5,000 to 8,000) and butoxymethyl melamine curing agent at a weight ratio of 2:1. (3) Mixture of polyurethane resin (Mw: 5,000 to 9,000) and hexamethoxy methyl melamine curing agent at a weight ratio of 5:2. (4) Mixture of acrylic resin (Mw: 5,000 to 10,000) and melamine curing agent at a weight ratio of 2:1. B. Pigment: a carbon black pigment (Printex^{?} Degussa, Germany) having a mean particle diameter of approximately 15 to 2 5nm (nanometers). C. Flatting agent: Mixture of silica and titania at a weight ratio of 9:1. D. Titanium compound: isopropylditriethanolamino titanate. E. Other additives: (1) Curing catalyst: *p*-toluene sulfonic aicd (2) Pigment anticoagulant: BYK-170 (trademark, BYK chemie) pigment anticoagulant (3) Phosphate-based additive: zinc phosphate | | | | | |

### 4. Steel sheet surface treatment

Both surfaces of the galvanized steel sheet were roll-coated with the steel sheet surface treatment composition under the conditions as listed in the following Table 13, to form first and second steel sheet surface treatment coating films. The drying of the galvanized steel sheet was performed at PMT 150°C(degrees centigrade) in an induction heating system. Among the lower coating film, the first surface of the steel sheet surface treatment coating film had a dry coating thickness of approximately 1.0 *µ*m (micrometers), and the second surface of the steel sheet surface treatment coating film had a dry coating thickness of approximately 1.5 *µ*m (micrometers).

Then, the second surface of the steel sheet surface treatment coating film was bar-coated with each of the resin compositions as listed in Table 13 under the conditions as listed in Table 13, and dried at PMT 230°C(degrees centigrade) in an induction heating system to form a resin-coating film (an upper coating film) on the steel sheet surface treatment coating film (a lower coating film) formed on the second surface of the base steel sheet. Then, each of the steel sheets was evaluated for physical properties. The results are listed in the following Table 14. The physical properties were measured in the same manner as described later in the items for the evaluation of physical properties.

**[Table 13]**

| | First surface | | Second surface | | | |
|---|---|---|---|---|---|---|
| Comparative Examples | Adhesion-improving resin composition | Coating content of lower coating film (mg/m²) | Adhesion improving resin composition | Coating content of lower coating film (mg/m²) | Resin composition | Thickness of top coating film (um) |
| Example 53 | Example 6 | 400 | Example 19 | 800 | Example 40 | 5 |
| Example 54 | | 600 | | 1,000 | | 5 |
| Example 55 | | 800 | | 1,200 | | 5 |
| Example 56 | Example 8 | 400 | Example 23 | 900 | Example 44 | 10 |
| Example 57 | | 600 | | 1,100 | | 10 |
| Example 58 | | 1,000 | | 1,400 | | 10 |
| Example 59 | Example 12 | 400 | Example 27 | 800 | Example 47 | 15 |
| Example 60 | | 600 | | 1,200 | | 15 |
| Example 61 | | 1,200 | | 1,200 | | 15 |
| Example 62 | Example 15 | 400 | Example 32 | 800 | Example 49 | 20 |
| Example 63 | | 600 | | 1,000 | | 20 |
| Example 64 | | 1,400 | | 1,800 | | 20 |
| Example 65 | Example 34 | 400 | Example 35 | 800 | Example 52 | 5 |
| Example 66 | | 600 | | 1,000 | | 10 |
| Example 67 | | 800 | | 1,600 | | 15 |

**[Table 14]**

| | First surface | Second surface | | | | | | |
|---|---|---|---|---|---|---|---|---|
| Comparative Examples | Electro-conductivity (mΩ) | In-plane corrosion resistance | Corrosion resistance at processed part | Workability | Coating adhesion | Solvent resistance | Fingerprint resistance | Heat release property (Reduction in internal temp., °C) |
| Example 53 | 0.04-0.06 | ○ | ○ | ⊚ | ⊚ | ○ | ⊚ | 6 |
| Example 54 | | ○ | ○ | ⊚ | ⊚ | ○ | ⊚ | 6 |
| Example 55 | | ○ | ○ | ⊚ | ⊚ | ○ | ⊚ | 6 |
| Example 56 | | ⊚ | ⊚ | ⊚ | ⊚ | ⊚ | ⊚ | 8 |
| Example 57 | | ⊚ | ⊚ | ⊚ | ⊚ | ⊚ | ⊚ | 8 |
| Example 58 | | ⊚ | ⊚ | ⊚ | ⊚ | ⊚ | ⊚ | 8 |
| Example 59 | | ⊚ | ⊚ | ⊚ | ⊚ | ⊚ | ⊚ | 8 |
| Example 60 | | ⊚ | ⊚ | ⊚ | ⊚ | ⊚ | ⊚ | 8 |
| Example 61 | | ⊚ | ⊚ | ⊚ | ⊚ | ⊚ | ⊚ | 8 |
| Example 62 | | ⊚ | ⊚ | ⊚ | ⊚ | ⊚ | ⊚ | 8 |
| Example 63 | | ⊚ | ⊚ | ⊚ | ⊚ | ⊚ | ⊚ | 8 |
| Example 64 | | ⊚ | ⊚ | ⊚ | ⊚ | ⊚ | ⊚ | 8 |
| Example 65 | | ⊚ | ⊚ | ⊚ | ⊚ | ⊚ | ⊚ | 8 |
| Example 66 | | ⊚ | ⊚ | ⊚ | ⊚ | ⊚ | ⊚ | 8 |
| Example 67 | | ⊚ | ⊚ | ⊚ | ⊚ | ⊚ | ⊚ | 8 |
| Comp-example 1a | 0.06 | Δ | Δ | Δ | Δ | Δ | ⊚ | 2 |
| Comp-example 2a | - | Δ | Δ | Δ | Δ | Δ | Δ | 0 |

| | | | | | | | | |
|---|---|---|---|---|---|---|---|---|
| (1) Comparative example 1a: Fingerprint-resistant, electrogalvanized steel sheet (thickness: 0.5 mm (millimeters), resin coating content: 1500 mg/m² (milligram/square meter); POSCO). (2) Comparative example 2a: Electrogalvanized steel whose thickness is 0.5 mm (millimeters) and both surfaces are coated with zinc (Zn) in a coating content of 20 g/m ² (grams/square meter) per one surface. | | | | | | | | |

The resin-coating films of the steel sheets of Comparative Examples 53-67 might be cured at low temperature. Also, although the resin-coating films were thin-film coating layers, they showed excellent physical properties, such as electroconductivity, workability, adhesion, solvent resistance, fingerprint resistance and heat release property, which are required in the steel sheets, wherein the heat release property refers to the reduction in internal temperature of a steel sheet by approximately 6 to 8°C (degrees centigrade). Also, the resin-coating films of the steel sheets showed more excellent heat release property and solvent resistance as the resin-coating film got thicker within the ranges of the conditions used to form the resin-coating film according to one aspect described herein. Furthermore, the steel sheets of Comparative Examples 53-67 showed excellent coating physical properties even during a rapid heating process using induction heat to dry the steel sheets. However, the steel sheet of Comparative example 1a had insufficient corrosion resistance, workability, adhesion and solvent resistance, compared to the steel sheets of Comparative Examples 53-67 according to one exemplary embodiment of the present invention, and showed an effect to reduce its internal temperature by 2°C (degrees centigrade).

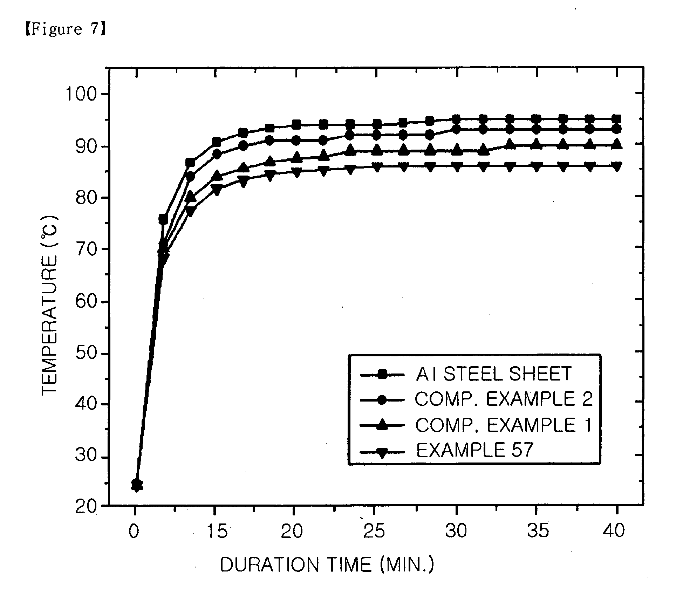

Also, the steel sheet of Comparative Example 57, the aluminum steel sheet (thickness: 0.5 mm (millimeters)), and the steel sheets of Comparative examples 1a and 2a were measured for heat release property (reduction in internal temperature). The results are shown in FIG. 7. As seen from the graph in FIG. 7, it was revealed that, when the electrogalvanized steel sheet of Comparative example 2a was used as the standard steel sheet, the steel sheet of Comparative example 57 had a significant reduction in internal temperature, compared to the aluminum steel sheet and the steel sheet of Comparative example 1, and this reduction in internal temperature of the steel sheet is sustained for an extended time period.

### 5. Evaluation of physical properties of steel sheets

### (1) Heat absorption and release property

Equipment as shown in FIG. 5 was manufactured to evaluate the heat absorption and release property of a steel sheet. The equipment of FIG. 5 comprised an exterior covering formed of Styrofoam (a), an aluminum foil (c) lined on an inner part of the Styrofoam, and a heater (b) arranged in a central region thereof. A radiation-intercepting aluminum plate (f) was arranged on the heater (b). A thermometer (d) is installed between the heater (b) and an upper portion of the equipment so that it can be arranged above the central region of the heater (b), as shown in FIG. 5. A steel sheet test sample to be measured was put on an opened top surface (e) the equipment and the change in temperature in a box was measured. The volume of the equipment was 200 mm x 200 mm x 200 mm (millimeters).

The steel sheet prepared in each of Inventive examples and Comparative examples was cut into test samples with size of 200 mm x 200 mm (millimeters), one of the test samples was attached to the opened top surface (e) of the equipment, and the equipment was sealed. When a resin-coating film was formed on only one surface of the test sample, the test sample was attached to the opened top surface (e) of the equipment so that a resin-coated surface of the steel sheet can face an outer surface of the equipment. The heat-release temperature from the test sample was evaluated by determining the difference (ΔT) in internal temperatures between an uncoated base steel sheet and a resin-coated steel sheet.

### (2) Surface electroconductivity

The surface electroconductivity of a steel sheet was evaluated according to the four probe method using a LORESTA GP meter (Mitsubishi Chemical Corporation). The measurement of a steel sheet test sample with 80 mm x 150 mm (millimeters) was repeated 9 times to calculate a mean value. The results are listed in Table 14.

### (3) Coating adhesion

The coating adhesion to a steel sheet was evaluated according to the test method as described in ASTM D3359, as follows. A heat-releasing steel sheet test sample was put into distilled water with a temperature 50°C (degrees centigrade), dipped for 240 hours, and then dried. 100 marks in the form of checkered pattern were drawn at a distance of 1 mm (millimeter) on a surface of a resin-coating film of the steel sheet test sample. Then, when the coating film was peeled off by a Scotch®transparent tape, peeled marks on the coating film were counted to evaluate the coating adhesion to a steel sheet.

### [Evaluation criteria]

⊚: No peels on coating film, ○ : 1 to 3 peels on coating film, and Δ : 4 or more peels on coating film

### (4) In-plane corrosion resistance

The in-plane corrosion resistance of a steel sheet was evaluated according to the test method as described in ASTM B117, as follows. A heat-releasing steel sheet was subject to a brine spray test, and measured for corrosion resistance.

The evaluation grade was determined by a time required until 5 area% (area percent) of white rust occurred on the steel sheet test sample. The evaluation criteria are listed, as follows.

### [Evaluation criteria]

⊚: No white rust generated after 120 hours, ○ : Less than 5 area% (area percent) of white rust generated after 96 hours, and Δ: Less than 5 area% (area percent) of white rust generated after 72 hours

### (5) Corrosion resistance at processed part

The corrosion resistance at processed part was evaluated by spraying an X-cut region of a steel sheet test sample with brine and measuring a size of formed blisters.

### [Evaluation criteria]

⊚: Less than 2 mm (millimeters), ○: 3 to 5 mm (millimeters), Δ : Greater than 5 mm (millimeters)

### (6) Solvent resistance

The solvent resistance of a steel sheet was determined by cutting a heat-releasing steel sheet into test samples with size of 50 mm x 100 mm (millimeters), rubbing the resin coating film surface of test samples with a force of 1 Kgf with gauze dipped in methylethylketone, and counting the rubbing number until the resin coating film was peeled off.

### [Evaluation criteria]

⊚ : Greater than 20 cycles, ○: 10 to 20 cycles, and Δ : 5 to 9 cycles

### (7) Fingerprint resistance

The fingerprint resistance of a steel sheet was evaluated by soaking a resin-coated steel sheet in an artificial fingerprint solution for 5 seconds and measuring the color difference (ΔE) in the resin-coated steel sheet.

### [Evaluation criteria]

⊚: ΔE ≤ 0.5, ○: 0.5 < ΔE < 2.0, and Δ: ΔE ≥2.0.

### (8) Workability

100 marks in the form of checkered pattern were drawn at a distance of 1 mm (millimeter) on a resin coating film formed on a second surface of a base steel sheet, and performed Ericksen processing by 7mm(millimeter). Then, when the coating film was peeled off by a Scotch transparent tape, peeled marks on the resin coating film were counted to evaluate the workability of the coating film.

### [Evaluation criteria]

⊚: No peel, ○: Peel rate of less than 5% (percent), and Δ: Peel rate of 5% (percent) or more

## Claims

1. A resin-coated steel sheet, comprising:
a base steel sheet;
a steel sheet surface treatment coating film formed of a steel sheet surface treatment composition on at least one of first and second surfaces of the base steel sheet, wherein the steel sheet surface treatment composition comprises 0.5 to 10 parts by weight of a silane coupling agent, 1 to 20 parts by weight of a metal silicate compound, 0.2 to 8 parts by weight of a titanium compound and up to 40 parts by weight of a resin-melamine based curing agent composition which comprises at least one of a resin selected from the group consisting of polyethylene acrylate resin and polyurethane resin having a weight average molecular weight of 2,000 to 25,000, a melamine based curing agent, and 20 to 60 parts by weight of a urethane resin having a number average molecule weight of 1000 or less; and
a resin-coating film formed of a resin composition on at least one surface selected from the group of the first base steel sheet, the second base steel sheet, the first steel sheet surface treatment coating film and the second steel sheet surface treatment coating film and the resin composition comprises (1) 20 to 50 parts by weight of a main resin-melamine based curing agent composition comprising at least one of resin selected from the group consisting of polyester resin and acrylic resin having a weight average molecule weight of 2,000 to 50,000, (2) 2 to 8 parts by weight of a pigment and (3) 2 to 8 parts by weight of a flatting agent,
wherein a dry coating thickness of the steel sheet surface treatment coating film is 0.5 to 3.0 µm (micrometers), and the steel sheet surface treatment composition applied to the second surface of the base steel sheet has a higher dry coating thickness than the steel sheet surface treatment composition applied to the first surface of the base steel sheet.

2. The resin-coated steel sheet of claim 1, wherein the weight ratio of the resin to the melamine based curing agent in the resin-melamine based curing agent is 10:1 to 10:7.

3. The resin-coated steel sheet of claim 1, wherein the steel sheet surface treatment composition further comprises up to 5 parts by weight of phosphate ester.

4. The resin-coated steel sheet of claim 1, wherein the main resin is a polyester resin prepared by mixing a polyester resin having a number average molecule weight of greater than 20,000 to 25,000 with a polyester resin having a number average molecule weight of greater than 25,000 to 50,000, so that a weight ratio of polyester resin with a number average molecule weight of greater than 20,000 to 25,000 to the polyester resin and a number average molecule weight of greater than 25,000 to 50,000 can be in the range of 3:7 to 7:3.

5. The resin-coated steel sheet of claim 1, the resin composition comprises at least one selected from the group consisting of up to 2 parts by weight of the fingerprint-resistant additive selected from the group consisting of dimethyltetramethoxy disiloxane, dodecamethylpenta siloxane and dimethyl polysiloxane, and modified acrylic resins; 2 to 10 parts by weight of at least one spherical metal powder selected from the group consisting of aluminum, nickel, zinc and iron powders, and up to 6 parts by weight of a titanium compound.

6. The resin-coated steel sheet of claim 1, wherein the base steel sheet comprises a galvanized steel sheet.

7. Use of the resin-coated steel sheet of claim 1 in a display panel.

## Patentansprüche

1. Harzbeschichtetes Stahlblech, umfassend:
ein Basisstahlblech;
einen Stahlblechoberflächenbehandlungsbeschichtungsfilm, der aus einer Stahlblechoberflächenbehandlungszusammensetzung auf der ersten und/oder der zweiten Oberfläche des Basisstahlblechs ausgebildet ist, wobei die Stahlblechoberflächenbehandlungszusammensetzung 0,5 bis 10 Gewichtsteile an einem Silankopplungsmittel, 1 bis 20 Gewichtsteile an einer Metallsilicatverbindung, 0,2 bis 8 Gewichtsteile an einer Titanverbindung und bis zu 40 Gewichtsteile an einer Harz-Melaminbasishärtungsmittel-Zusammensetzung, die mindestens ein Harz, das aus der Gruppe von einem Polyethylenacrylatharz und einem Polyurethanharz mit einem Massemittel der relativen Molekülmasse von 2000 bis 25000 ausgewählt ist, ein Melaminbasishärtungsmittel umfasst, und 20 bis 60 Gewichtsteile an einem Urethanharz mit einem Anzahlmittel der relativen Molekülmasse von 1000 oder weniger umfasst; und
einen Harzbeschichtungsfilm, der aus einer Harzzusammensetzung auf mindestens einer Oberfläche ausgebildet ist, die aus der Gruppe von dem ersten Basisstahlblech, dem zweiten Basisstahlblech, dem ersten Stahlblechoberflächenbehandlungsbeschichtungsfilm und dem zweiten Stahlblechoberflächenbehandlungsbeschichtungsfilm ausgewählt ist, und wobei die Harzzusammensetzung (1) 20 bis 50 Gewichtsteile an einer Hauptharz-Melaminbasishärtungsmittel-Zusammensetzung, die mindestens ein Harz umfasst, das aus der Gruppe von einem Polyesterharz und einem Acrylharz mit einem Massemittel der relativen Molekülmasse von 2000 bis 50000 ausgewählt ist, (2) 2 bis 8 Gewichtsteile an einem Pigment und (3) 2 bis 8 Gewichtsteile an einem Mattierungsmittel umfasst,
wobei die Trockenbeschichtungsdicke des Stahlblechoberflächenbehandlungsbeschichtungsfilms 0,5 bis 3,0 µm (Mikrometer) beträgt und die auf die zweite Oberfläche des Basisstahlblechs applizierte Stahlblechoberflächenbehandlungszusammensetzung eine höhere Trockenbeschichtungsdicke als die auf die erste Oberfläche des Basisstahlblechs applizierte Stahlblechoberflächenbehandlungszusammensetzung aufweist.

2. Harzbeschichtetes Stahlblech nach Anspruch 1, wobei das Masseverhältnis des Harzes zu dem Melaminbasishärtungsmittel in dem Harz-Melaminbasishärtungsmittel 10:1 bis 10:7 beträgt.

3. Hartbeschichtetes Stahlblech nach Anspruch 1, wobei die Stahlblechoberflächenbehandlungszusammensetzung ferner bis zu 5 Gewichtsteile an Phosphatester umfasst.

4. Harzbeschichtetes Stahlblech nach Anspruch 1, wobei das Hauptharz ein Polyesterharz ist, das durch Mischen eines Polyesterharzes mit einem Anzahlmittel der relativen Molekülmasse von mehr als 20000 bis 25000 mit einem Polyesterharz mit einem Anzahlmittel der relativen Molekülmasse von mehr als 25000 bis 50000 derart hergestellt wurde, so dass das Masseverhältnis von Polyesterharz mit einem Anzahlmittel der relativen Molekülmasse von mehr als 20000 bis 25000 zu dem Polyesterharz mit einem Anzahlmittel der relativen Molekülmasse von mehr als 25000 bis 50000 im Bereich von 3:7 bis 7:3 sein kann.

5. Harzbeschichtetes Stahlblech nach Anspruch 1, wobei die Harzzusammensetzung mindestens eine Komponente umfasst, die aus der Gruppe von bis zu 2 Gewichtsteilen an dem fingerabdruckabweisenden Additiv, das aus der Gruppe von Dimethyltetramethoxydisiloxan, Dodecamethylpentasiloxan und Dimethylpolysiloxan und modifizierten Acrylharzen ausgewählt ist; 2 bis 10 Gewichtsteilen an mindestens einem kugelförmigen Metallpulver, das aus der Gruppe von Aluminium-, Nickel-, Zink- und Eisenpulvern ausgewählt ist, und bis zu 6 Gewichtsteilen an einer Titanverbindung ausgewählt ist.

6. Harzbeschichtetes Stahlblech nach Anspruch 1, wobei das Basisstahlblech ein galvanisiertes Stahlblech umfasst.

7. Verwendung des harzbeschichteten Stahlblechs nach Anspruch 1 in einer Anzeigetafel.

## Revendications

1. Tôle d'acier revêtue de résine, comprenant :
une tôle d'acier de base ;
un film de revêtement de traitement de surface de tôle d'acier se composant d'une composition de traitement de surface de tôle d'acier sur au moins une des première et seconde surfaces de la tôle d'acier de base, la composition de traitement de surface de tôle d'acier comprenant de 0,5 à 10 parties en poids d'un agent de couplage de silane, de 1 à 20 parties en poids d'un composé de silicate métallique, de 0,2 à 8 parties en poids d'un composé de titane et jusqu'à 40 parties en poids d'une composition d'agent de durcissement à base de mélamine-résine qui comprend au moins une résine choisie dans le groupe constitué par une résine d'acrylate de polyéthylène et une résine de polyuréthane ayant un poids moléculaire moyen en poids de 2 000 à 25 000, un agent de durcissement à base de mélamine, et de 20 à 60 parties en poids d'une résine d'uréthane ayant un poids moléculaire moyen en nombre inférieur ou égal à 1 000 ; et
un film de revêtement de résine se composant d'une composition de résine sur au moins une surface choisie dans le groupe constitué par la première surface de la tôle d'acier de base, la seconde surface de la tôle d'acier de base, le premier film de revêtement de traitement de surface de la tôle d'acier et le second film de revêtement de traitement de surface de la tôle d'acier et la composition de résine comprend (1) de 20 à 50 parties en poids d'une composition d'agent de durcissement à base de mélamine-résine comprenant au moins une résine choisie dans le groupe constitué par une résine de polyester et une résine acrylique ayant un poids moléculaire moyen en poids de 2 000 à 50 000, (2) de 2 à 8 parties en poids d'un pigment et (3) de 2 à 8 parties en poids d'un agent de matité,
dans laquelle l'épaisseur de revêtement sec du film de revêtement de traitement de surface de tôle d'acier est de 0,5 à 3,0 µm (micromètres) et la composition de traitement de surface de tôle d'acier appliquée sur la seconde surface de la tôle d'acier de base a une épaisseur de revêtement sec supérieure à celle de la composition de traitement de surface de tôle d'acier appliquée sur la première surface de la tôle d'acier de base.

2. Tôle d'acier revêtue de résine selon la revendication 1, dans laquelle le rapport pondéral de la résine à l'agent de durcissement à base de mélamine de la composition d'agent de durcissement à base de mélamine-résine est de 10:1 à 10:7.

3. Tôle d'acier revêtue de résine selon la revendication 1, dans laquelle la composition de traitement de surface de tôle d'acier comprend en outre jusqu'à 5 parties en poids d'un ester de phosphate.

4. Tôle d'acier revêtue de résine selon la revendication 1, dans laquelle la résine principale est une résine de polyester préparée par mélange d'une résine de polyester ayant un poids moléculaire moyen en nombre de plus de 20 000 à 25 000 avec une résine de polyester ayant un poids moléculaire moyen en nombre de plus de 25 000 à 50 000, de sorte que le rapport pondéral de la résine de polyester ayant un poids moléculaire moyen en nombre de plus de 20 000 à 25 000 à la résine de polyester ayant un poids moléculaire moyen en nombre de plus de 25 000 à 50 000 puisse être compris dans la plage allant de 3:7 à 7:3.

5. Tôle d'acier revêtue de résine selon la revendication 1, dans laquelle la composition de résine comprend au moins un élément choisi dans le groupe constitué par jusqu'à 2 parties en poids d'un additif antitrace choisi dans le groupe constitué par le diméthyltétraméthoxydisiloxane, le dodécaméthylpentasiloxane et le diméthylpolysiloxane, et les résines acryliques modifiées ; de 2 à 10 parties en poids d'au moins une poudre métallique sphérique choisie dans le groupe constitué par les poudres d'aluminium, de nickel, de zinc et de fer, et jusqu'à 6 parties en poids d'un composé de titane.

6. Tôle d'acier revêtue de résine selon la revendication 1, dans laquelle la tôle d'acier de base comprend une tôle d'acier galvanisé.

7. Utilisation de la tôle d'acier revêtue de résine selon la revendication 1 dans un panneau d'affichage.
